(19) Europäisches Patentamt
European Patent Office
Office européen des brevets

(11) EP 2 634 740 A1

(12) EUROPEAN PATENT APPLICATION
published in accordance with Art. 153(4) EPC

(43) Date of publication:
**04.09.2013 Bulletin 2013/36**

(21) Application number: **11836193.0**

(22) Date of filing: **24.10.2011**

(51) Int Cl.:
***G06Q 30/00*** *(2012.01)* ***C02F 1/46*** *(2006.01)*
***G06Q 50/00*** *(2012.01)*

(86) International application number:
**PCT/JP2011/074398**

(87) International publication number:
**WO 2012/057059 (03.05.2012 Gazette 2012/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.10.2010 JP 2010239972**

(71) Applicant: **Morinaga Milk Industry Co., Ltd.**
**Minato-ku**
**Tokyo 108-8384 (JP)**

(72) Inventor: **MATSUYAMA Koki**
**Higashiyamato-shi**
**Tokyo 207-0021 (JP)**

(74) Representative: **Vossius & Partner**
**Siebertstrasse 4**
**81675 München (DE)**

# (54) DELIVERY PLAN PRESENTING SYSTEM, DELIVERY PLAN PRESENTING DEVICE, CONTROL METHOD, PROGRAM, AND COMPUTER READABLE RECORDING MEDIUM

(57) A delivery plan presenting device includes: a required amount calculating unit; a generated amount calculating unit; a calculating unit of the number of electrode plates; a specification selecting unit configured to select at least one specification of the electrolytic cell from among specifications of electrolytic cells to be constituted by the electrode plates, based on a condition for the manufacturing machine which is emphasized by the client; a delivery plan generating unit configured to generate a delivery plan that presents the specification of the electrolytic cell which is selected by the specification selecting unit and which includes information concerning the number of electrode plates of the electrolytic cell, or a specification of the manufacturing machine including the electrolytic cell; and a delivery plan data output unit configured to output data indicating the delivery plan generated by the delivery plan generating unit.

FIG. 2

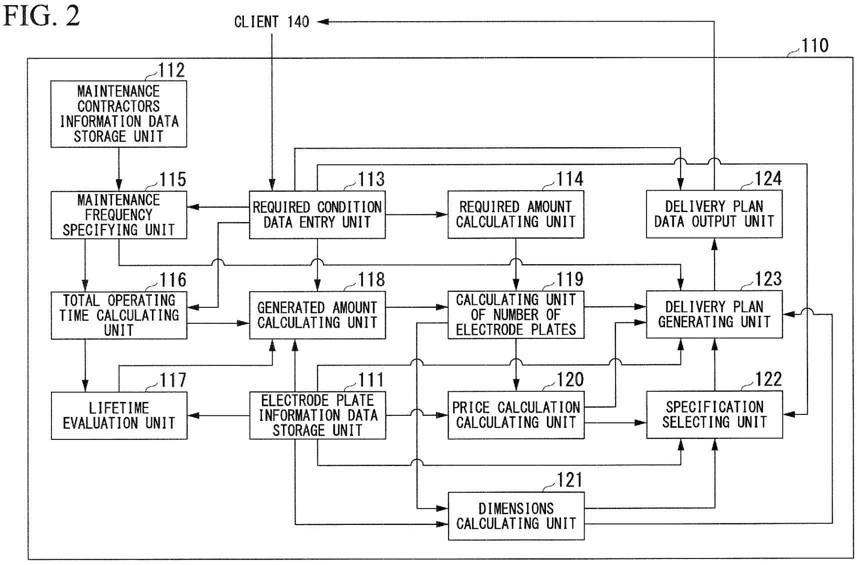


EP 2 634 740 A1

## Description

TECHNICAL FIELD

The present invention relates to a delivery plan presenting system, a delivery plan presenting device, a control method, a program, and a computer-readable recording medium. Particularly, the present invention relates to: a delivery plan presenting system that presents a delivery plan suitable to a manufacturing capability of electrolysis water required by a client, as a delivery plan of a manufacturing machine of the electrolysis water to be presented to the client; a delivery plan presenting device; a control method of controlling the delivery plan presenting device; a program for the delivery plan presenting device; and a computer-readable recording medium storing therein the program for the delivery plan presenting device.
Priority is claimed on Japanese Patent Application No. 2010-239972, filed October 26, 2010, the content of which is incorporated herein by reference.

BACKGROUND ART

A primal factor for bacterial and viral food poisoning is microorganism. Harmful bacteria and viruses contained in foods enter the body, thus causing acute gastroenteritis. Outbreaks of Bacterial and viral food poisoning used to occur in summer. However, many outbreaks thereof have recently occurred throughout the year.

For this reason, in order to sterilize microorganisms that cause bacterial and viral food poisoning, ingredients and the like are cleansed with electrolysis sterilized water in food factories and the like. The electrolysis sterilized water is manufactured by electrolyzing hydrochloric acid solution in a non-diaphragm electrolytic cell, and then diluting the hydrochloric acid solution with water by proper concentration. In other words, the manufacturing capability of electrolysis sterilized water is subject to the restriction of the productive capacity of electrolysis of the electrolytic cell.

The amount and the concentration of electrolysis sterilized water required in food factories or the like differ depending on the use thereof. For this reason, when a manufacturing machine of electrolysis sterilized water is introduced in a food factory or the like, it is necessary to introduce a manufacturing machine suitable for that use. However, the manufacturing capability of actual manufacturing machines of electrolysis sterilized water on sale, such as the amount and the concentration of the electrolysis sterilized water, is predefined for each type. For this reason, it is difficult to select a type with the manufacturing capability of electrolysis sterilized water suitable for the actual use.

Additionally, application of electrolysis sterilized water is expected in fields other than the food industry, such as a field of ships processing ballast water. Further, there are needs to design various types of machines, such as automatic milking machines and apparatus washing machines, so as to previously integrated an electrolytic cell therein (see, for example, Patent Documents 1 and 2) . Selection of a type of electrolytic cell is important in such a case.

With respect to the above problems, it is required to provide a type of manufacturing machine of electrolysis water such as electrolysis sterilized water, which has specifications suitable to the needs of a client. As specific marketing methods, a marketing method of marketing various types with subdivided specifications, as products, and a custom-made method can be considered. However, in the former marketing method, all the types are not necessarily suitable to the needs of clients, thereby making it likely to create an excess in inventory. For this reason, it is not always possible to provide a proper type with specifications suitable for actual use. In the latter marketing method, there is no possibility of creating an excess in inventory, and therefore it is possible to provide a proper type with specifications suitable for actual use. Needless to say, however, the price increases in the latter marketing method.

As another marketing method achieving a good balance with the sales price, a pattern order marketing method can be considered. In this method, many patterns are prepared for part of the components of a manufacturing machine of electrolysis sterilized water, and those components are combined, thereby manufacturing and marketing a type suitable to the needs of clients.

As a marketing system using the pattern order method, a pattern order system is known. In this system, multiple standard dimension patterns for manufacturing products in different dimensions are previously prepared, a standard dimension pattern close to the body shape of a client is specified, and that standard dimension pattern is modified, thus supporting manufacture of a product for that client (see, for example, Patent Document 3). In this system, multiple combinations of predetermined dimension items among dimension items of the standard dimension patterns are stored in a storage device while being correlated to standard dimension pattern information including other items. Then, in this system, selection information relating to a design, a material, and the like, and measuring information obtained by a three-dimensional physical measurement device are received. Then, in this system, the storage device is searched based on the dimension of a predetermined item among the received measuring information, thus identifying the standard dimension pattern associated with that dimension. Then, the specified standard dimension pattern information is modified based on the dimension information concerning other items, which is included in the received measuring information, thereby obtaining client dimension pattern information. Then, in this system, a product for that client is manufactured based on the selection information and the client dimension pattern information.

CITATION LIST

[Patent Document]

[Patent Document 1] Japanese Patent Unexamined Application, First Publication No. 2006-061006
[Patent Document 2] Japanese Patent Unexamined Application, First Publication No. 2006-068184
[Patent Document 3] Japanese Patent Unexamined Application, First Publication No. 2004-318336

DISCLOSURE OF INVENTION

Problems to be Solved by the Invention

According to the pattern order system disclosed in Patent Document 1, it is possible to easily and precisely measure the body of a client without causing the client to feel stress, and provide cloths and the like suitable to the favor and the body of the client at low cost without carrying an inventory. However, Patent Document 1 discloses the pattern order system using the pattern order method applicable only to products to be attached onto the body, such as shoes and eye glasses, in addition to clothes and the like. In other words, the pattern order system disclosed in Patent Document 1 is not applicable to a case where a manufacturing machine of electrolysis water, such as the above, is marketed by the pattern order method. In the present circumstances, no method suitable for marketing manufacturing machines of electrolysis water by the pattern order method has been known.

Means for Solving the Problems

To solve the above problems, according to a first embodiment of the present invention, a delivery plan presenting system that presents a delivery plan of a manufacturing machine of electrolysis water to be delivered to a client includes: a required amount calculating unit configured to calculate, based on a concentration of an active element in electrolysis water which is required by the client, and a maximum value of an amount of electrolysis water manufactured per unit duration which is required by the client, an amount of the active element to be required per the unit duration; a generated amount calculating unit configured to calculate, based on a specification of an electrode plate to be selected as an electrode of the electrolytic cell, a maximum value of an operating time per unit duration of the manufacturing machine which is required by the client, and an electrochemical equivalent of the active element, an amount of the active element to be generated per the unit duration in one electrolytic cell using the two electrode plates; a calculating unit of the number of electrode plates configured to calculate, based on the amount of the active element calculated by the required amount calculating unit and the amount of the active element calculated for each of the electrode plates by the generated amount calculating unit, the number of electrode plates required to generate per the unit duration the amount of the active element calculated by the required amount calculating unit; a specification selecting unit configured to select at least one specification of the electrolytic cell from among specifications of electrolytic cells to be constituted by the electrode plates, based on a condition for the manufacturing machine which is emphasized by the client; a delivery plan generating unit configured to generate a delivery plan that presents the specification of the electrolytic cell which is selected by the specification selecting unit and which includes information concerning the number of electrode plates of the electrolytic cell, or a specification of the manufacturing machine including the electrolytic cell; and a delivery plan data output unit configured to output data indicating the delivery plan generated by the delivery plan generating unit.

The required amount calculating unit may be configured to, when the client requires a maximum value of an amount of electrolysis water manufactured per unit time that is shorter than the unit duration, calculate a maximum value of an amount of electrolysis water manufactured per the unit duration, based on the maximum value of the amount of electrolysis water manufactured per the unit time and the maximum value of the operating time per the unit duration of the manufacturing machine, and calculate the amount of the active element to be required per the unit duration, based on the calculated amount of the maximum value of the amount of electrolysis water manufactured per the unit duration and the concentration of the active element in electrolysis water which is required by the client.

The required amount calculating unit may be configured to, when the client requires that a plurality of electrolytic cells be used, divides the maximum value of the amount of electrolysis water manufactured per the unit duration which is required by the client, by the number of electrolytic cells required by the client, to obtain a value as the maximum value of the amount of electrolysis water manufactured per the unit duration which is required by the client, thereby calculating the amount of the active element to be required per the unit duration.

The delivery plan presenting system may further include: a maintenance frequency specifying unit configured to specify, based on information concerning an address at which the manufacturing machine is to be installed, a frequency at which a maintenance agency visits the address and maintains the manufacturing machine; a total operating time calculating unit configured to calculate, the frequency of maintaining the manufacturing machine which is specified by the maintenance frequency specifying unit, and the maximum value of the operating time per the unit duration of the manufacturing machine, calculate the total operating time to be estimated as an operating time of the manufacturing machine, in a period from the time when the manufacturing machine is maintained to the time when the manufacturing machine is next maintained; and a lifetime determining unit configured to determine, for each of the electrode plates whether or not a lifetime of the electrode plate is longer than the total operating time calculated by the total operating time calculating unit. The generated amount calculating unit is configured to calculate the amount of the active element only for the electrode plate having the lifetime determined by the lifetime determining unit to be longer than the total operating time, based further on the lifetime of the electrode plate and the total operating time calculated by the total operating time calculating unit.

The delivery plan presenting system may further include: a price calculating unit configured to calculate a price of each of the electrolytic cells to be constituted by the electrode plates, based on the number of electrode plates calculated by the calculating unit of the number of electrode plates for each of the electrode plates and a unit price of each of the electrode plates. The specification selecting unit is configured to, when the condition for the manufacturing machine which is emphasized by the client is that a price of the manufacturing machine be cheaper, select at least one specification of the electrode cell that is cheaper, based on the price of each of the electrolytic cells calculated by the price calculating unit.

The delivery plan presenting system may further include: a dimensions calculating unit configured to calculate, based on the number of electrode plates calculated by the calculating unit of the number of electrode plates for each of the electrode plates and dimensions of each of the electrode plates, dimensions of each of electrolytic cells to be constituted by each of the electrode plates. The specification selecting unit is configured to select at least one specification of the electrolytic cell that is smaller in dimensions, based on the dimensions of each of the electrolytic cells calculated by the dimensions calculating unit.

The specification selecting unit may be configured to, when the condition for the manufacturing machine which is emphasized by the client is that a lifetime of the manufacturing machine be longer, select at least one specification of the electrolytic cell that is longer in lifetime.

The delivery plan generating unit may be configured to generate the delivery plan that further presents a price of the manufacturing machine including the electrolytic cell, which is determined based on the price of the electrolytic cell with the specification selected by the specification selecting unit.

The delivery plan generating unit may be configured to generate the delivery plan that further presents dimensions of the manufacturing machine including the electrolytic cell, which are determined based on the dimensions of the electrolytic cell with the specification selected by the specification selecting unit.

The delivery plan generating unit may be configured to generate the delivery plan that further presents the frequency of maintaining the manufacturing machine which is specified by the maintenance frequency specifying unit.

According to a second embodiment of the present invention, a delivery plan presenting device that presents a delivery plan of a manufacturing machine of electrolysis water to be delivered to a client includes: a required amount calculating unit configured to calculate, based on a concentration of an active element in electrolysis water which is required by the client, and a maximum value of an amount of electrolysis water manufactured per unit duration which is required by the client, an amount of the active element to be required per the unit duration; a generated amount calculating unit configured to calculate, based on a specification of an electrode plate to be selected as an electrode of the electrolytic cell, a maximum value of an operating time per unit duration of the manufacturing machine which is required by the client, and an electrochemical equivalent of the active element, an amount of the active element to be generated per the unit duration in one electrolytic cell using the two electrode plates; a calculating unit of the number of electrode plates configured to calculate, based on the amount of the active element calculated by the required amount calculating unit and the amount of the active element calculated for each of the electrode plates by the generated amount calculating unit, the number of electrode plates required to generate per the unit duration the amount of the active element calculated by the required amount calculating unit; a specification selecting unit configured to select at least one specification of the electrolytic cell from among specifications of electrolytic cells to be constituted by the electrode plates, based on a condition for the manufacturing machine which is emphasized by the client; a delivery plan generating unit configured to generate a delivery plan that presents the specification of the electrolytic cell which is selected by the specification selecting unit and which includes information concerning the number of electrode plates of the electrolytic cell, or a specification of the manufacturing machine including the electrolytic cell; and a delivery plan data output unit configured to output data indicating the delivery plan generated by the delivery plan generating unit.

According to a third embodiment of the present invention, a control method for a delivery plan presenting device that presents a delivery plan of a manufacturing machine of electrolysis water to be delivered to a client includes: a required amount calculating step of calculating, based on a concentration of an active element in electrolysis water which is required by the client, and a maximum value of an amount of electrolysis water manufactured per unit duration which is required by the client, an amount of the active element to be required per the unit duration; a generated amount calculating step of calculating, based on a specification of an electrode plate to be selected as an electrode of the electrolytic cell, a maximum value of an operating time per unit duration of the manufacturing machine which is required by the client, and an electrochemical equivalent of the active element, an amount of the active element to be generated per the unit duration in one electrolytic cell using the two electrode plates; a number of electrode plates calculating step of calculating, based on the amount of the active element calculated in the required amount calculating step and the amount of the active element calculated for each of the electrode plates in the generated amount calculating step, the number of electrode plates required to generate per the unit duration the amount of the active element calculated in the required amount calculating step; a specification selecting step of selecting at least one specification of the electrolytic cell from among specifications of electrolytic cells to be constituted by the electrode plates, based on a condition for the manufacturing machine which is emphasized by the client; a delivery plan generating step of generating a delivery plan that presents the specification of the electrolytic cell which is selected in the specification selecting step and which includes information concerning the number of electrode plates of the electrolytic cell, or a specification of the manufacturing machine including the electrolytic cell; and a delivery plan data output step of outputting data indicating the delivery plan generated in the delivery plan generating step.

According to a fourth embodiment of the present invention, a program for a delivery plan presenting device that presents a delivery plan of a manufacturing machine of electrolysis water to be delivered to a client causes a computer of the delivery plan presenting device to execute: a required amount calculating step of calculating, based on a concentration of an active element in electrolysis water which is required by the client, and a maximum value of an amount of electrolysis water manufactured per unit duration which is required by the client, an amount of the active element to be required per the unit duration; a generated amount calculating step of calculating, based on a specification of an electrode plate to be selected as an electrode of the electrolytic cell, a maximum value of an operating time per unit duration of the manufacturing machine which is required by the client, and an electrochemical equivalent of the active element, an amount of the active element to be generated per the unit duration in one electrolytic cell using the two electrode plates; a number of electrode plates calculating step of calculating, based on the amount of the active element calculated in the required amount calculating step and the amount of the active element calculated for each of the electrode plates in the generated amount calculating step, the number of electrode plates required to generate per the unit duration the amount of the active element calculated in the required amount calculating step; a specification selecting step of selecting at least one specification of the electrolytic cell from among specifications of electrolytic cells to be constituted by the electrode plates, based on a condition for the manufacturing machine which is emphasized by the client; a delivery plan generating step of generating a delivery plan that presents the specification of the electrolytic cell which is selected in the specification selecting step and which includes information concerning the number of electrode plates of the electrolytic cell, or a specification of the manufacturing machine including the electrolytic cell; and a delivery plan data output step of outputting data indicating the delivery plan generated in the delivery plan generating step.

According to a fifth embodiment of the present invention, a computer-readable recording medium for a delivery plan presenting device that presents a delivery plan of a manufacturing machine of electrolysis water to be delivered to a client causes a computer of the delivery plan presenting device to execute: a required amount calculating step of calculating, based on a concentration of an active element in electrolysis water which is required by the client, and a maximum value of an amount of electrolysis water manufactured per unit duration which is required by the client, an amount of the active element to be required per the unit duration; a generated amount calculating step of calculating, based on a specification of an electrode plate to be selected as an electrode of the electrolytic cell, a maximum value of an operating time per unit duration of the manufacturing machine which is required by the client, and an electrochemical equivalent of the active element, an amount of the active element to be generated per the unit duration in one electrolytic cell using the two electrode plates; a number of electrode plates calculating step of calculating, based on the amount of the active element calculated in the required amount calculating step and the amount of the active element calculated for each of the electrode plates in the generated amount calculating step, the number of electrode plates required to generate per the unit duration the amount of the active element calculated in the required amount calculating step; a specification selecting step of selecting at least one specification of the electrolytic cell from among specifications of electrolytic cells to be constituted by the electrode plates, based on a condition for the manufacturing machine which is emphasized by the client; a delivery plan generating step of generating a delivery plan that presents the specification of the electrolytic cell which is selected in the specification selecting step and which includes information concerning the number of electrode plates of the electrolytic cell, or a specification of the manufacturing machine including the electrolytic cell; and a delivery plan data output step of outputting data indicating the delivery plan generated in the delivery plan generating step.

The essential features of the present invention are not limited to the above-described outlines of the invention, and sub-combinations of the above features can be within the scope of the invention.

Effects of the Invention

It can be understood from the above explanations that according to the present invention, it is possible to present a delivery plan suitable to the manufacturing capability of electrolysis water required by a client, as a delivery plan of a manufacturing machine of electrolysis water to be delivered to the client.
Additionally, according to the present invention, it is possible to present a delivery plan of a manufacturing machine of electrolysis water to be delivered to the client, which is suitable to various needs in various industries, such as in a case where electrolysis sterilized water is used in a field of ships processing ballast water, and in a case where various types of machines, such as automatic milking machines and apparatus washing machines, are designed to previously integrate electrolytic cells therein.

BRIEF DESCRIPTION OF THE DRAWINGS

FIG. 1 is a diagram illustrating a use environment of a delivery plan presenting system 100 according an embodiment.
FIG. 2 is a diagram illustrating an example of a block configuration of a web server 110.
FIG. 3 is a diagram in table form illustrating an example of information stored by an electrode plate information data storage unit 111 of the web server 110.
FIG. 4 is a diagram in table form illustrating an example of information stored by a maintenance contractors information data storage unit 112 of the web server 110.
FIG. 5 is a diagram illustrating an example of a web page 180 for inputting conditions to be required when a client buys a manufacturing machine of slightly acidic hypochlorous acid water.
FIG. 6 is a diagram illustrating an example of a web wage 190 generated by a delivery plan generating unit 123 of the web server 110.
FIG. 7 is a diagram illustrating an example of an operational sequence for the web server 110 and a client 140.
FIG. 8 is a diagram illustrating an example of a hardware configuration of the web server 110.

BEST MODE FOR CARRYING OUT THE INVENTION

Hereinafter, embodiments of the present invention are explained. However, the present invention is not limited to the following embodiments, and all combinations of the features explained in the embodiments are not always essential to solving means of the present invention.
FIG. 1 illustrates an example of a use environment of a delivery plan presenting system 100 according to an embodiment. The delivery plan presenting system 100 is a system for presenting a delivery plan of a manufacturing machine of slightly acidic hypochlorous acid water to be delivered to a client. Here, slightly acidic hypochlorous acid water may be an example of "electrolysis water" of the present invention.
The delivery plan presenting system 100 includes: a web server 110; multiple clients 140a, 140b, 140c, ... (hereinafter, collectively referred to as "client 140"); and a communication line 150. Here, the web server 110 may be an example of the "delivery plan presenting device" of the present invention.
The communication line 150 includes a computer network such as the Internet, a core network for telecommunications carriers, and various local networks. The client 140 includes a mobile information terminal such as a mobile telephone and a PDA (personal digital assistants), and a personal computer.
The web server 110 is a computer that transmits to the client 140 via the communication line 150, a delivery plan of a manufacturing machine of slightly acidic hypochlorous acid water. The web server 110 is operated by a provider that provides the delivery plan presenting system 100. The client 140 is a computer that receives from the web server 110 via the communication line 150, the delivery plan of a manufacturing machine of slightly acidic hypochlorous acid water. The client 140 is used by a client who is going to buy a manufacturing machine of slightly acidic hypochlorous acid water, or a salesman who tries to sell a manufacturing machine of slightly acidic hypochlorous acid water to a client.
In the delivery plan presenting system 100, when a client buys a manufacturing machine of slightly acidic hypochlorous acid water, the client transmits data indicating required conditions to the web server 110 using the client 140. Specifically, the conditions required by the client include: the concentration of chlorine in slightly acidic hypochlorous acid water; the maximum value of the amount of slightly acidic hypochlorous acid water manufactured per day; the maximum value of an operating time per day of the manufacturing machine of slightly acidic hypochlorous acid water; and conditions emphasized in buying a manufacturing machine of slightly acidic hypochlorous acid water. Upon receiving from the client 140, the data indicating the conditions required by the client, the web server 110 calculates the estimated amount of chlorine to be required per day, based on the concentration of chlorine in slightly acidic hypochlorous acid water which is required by the client and the maximum amount of slightly acidic hypochlorous acid water manufactured per day which is required by the client. Then, based on the area, the current efficiency, and the optimal current density of an electrode plate selectable as an electrode of the electrolytic cell included in the manufacturing machine of slightly acidic hypochlorous acid water, the maximum value of the operating time per day of the manufacturing machine of slightly acidic hypochlorous acid water which is required by the client, and the electrochemical equivalent of chlorine, the web server 110 calculates, for each electrode plate of multiple types, the estimated amount of chlorine to be generated per day in one electrolytic cell using two electrode plates. Then, based on the estimated amount of chlorine to be required per day, which is calculated in the above manner, and the estimated amount of chlorine to be generated per day in one electrolytic cell using two electrode plates, which is calculated in the above manner for each electrode plate, the web server 110 calculates, for each electrode plate, the number of electrode plates required to generate the estimated amount of chlorine to be required per day which is calculated in the above manner.
Then, based on the conditions for the manufacturing machine of slightly acidic hypochlorous acid water which are emphasized by the client, the web server 110 selects at least one specification of an electrolytic cell from among specifications of the respective electrolytic cells constituted by each electrode plate. Then, the web server 110 generates a delivery plan that presents the selected specification of the electrolytic cell including information concerning the number of electrode plates in the electrolytic cell with the specification selected in the above manner, or the specification of the manufacturing machine of slightly acidic hypochlorous acid water including that electrolytic cell. Then, the web server 110 transmits to the client 140, a web page showing the delivery plan generated in this manner.

Thus, when a client buys a manufacturing machine of slightly acidic hypochlorous acid water, the client transmits data indicating required conditions, to the web server 110 using the client 140. Thus, the client can obtain a delivery plan indicating the specification of the manufacturing machine of slightly acidic hypochlorous acid water including the electrolytic cell having a configuration suitable to those conditions.

Here, chlorine may be an example of an "active substance" of the present invention. Additionally, the period of "per day" may be an example of a "unit duration" of the present invention. Further, the area, the current efficiency, and the optimal current density of an electrode plate may be an example of a "specification of an electrode plate" of the present invention. Moreover, the web page showing the delivery plan may be an example of "data indicating a delivery plan" of the present invention.

Additionally, in the delivery plan presenting system 100, when a client buys a manufacturing machine of slightly acidic hypochlorous acid water, if the client further requires the maximum value of the amount of slightly acidic hypochlorous acid water manufactured per hour, the client transmits data indicating that additional requirement, to the web server 110 using the client 140. Upon receiving from the client 140, data that further requires the maximum value of the amount of slightly acidic hypochlorous acid water manufactured per hour, the web server 110, when calculating the estimated amount of chlorine to be required per day, the maximum value of the amount of slightly acidic hypochlorous acid water manufactured per day, based on the maximum value of the manufacturing amount per hour which is required by the client and the maximum value of an operating time per day of the manufacturing machine of slightly acidic hypochlorous acid water which is required by the client. Then, the web server 110 calculates the estimated amount of chlorine to be required per day, based on the maximum value of the amount of slightly acidic hypochlorous acid water manufactured per day, which is calculated in this manner, and the concentration of chlorine in slightly acidic hypochlorous acid water which is required by the client. Then, the web server 110 generates a delivery plan of the manufacturing machine of slightly acidic hypochlorous acid water in the above manner, and transmits to the client 140, a web page showing the delivery plan.

Thus, when a client buys the manufacturing machine of slightly acidic hypochlorous acid water, if the client further requires the maximum value of the amount of slightly acidic hypochlorous acid water manufactured per hour, the client transmits data indicating that additional requirement, to the web server 110 using the client 140. Thereby, the client can obtain a delivery plan showing the specification of the manufacturing machine of slightly acidic hypochlorous acid water including the electrolytic cell having the configuration suitable to those conditions.
Here, the period of "per day" may be an example of the "unit duration" of the present invention.

Additionally, in the delivery plan presenting system 100, when a client buys a manufacturing machine of slightly acidic hypochlorous acid water including multiple electrolytic cells, the client transmits data indicating the desired number of electrolytic cells, to the web server 110 using the client 140. Upon receiving from the client 140, the data indicating the desired number of electrolytic cells, the web server 110 calculates the estimated amount of chlorine to be required per day, by regarding the value obtained by dividing the maximum value of the amount of electrolysis water manufactured per day which is required by the client, by the number of electrolytic cells required by the client, as the maximum number of the amount of electrolysis water manufactured per day which is required by the client. Then, the web server 110 generates a delivery plan of the manufacturing machine of slightly acidic hypochlorous acid water in the above manner, and transmits to the client 140, a web page showing that delivery plan.

Thus, when a client buys the manufacturing machine of slightly acidic hypochlorous acid water including multiple electrolytic cells, the client transmits data indicating the desired number of electrolytic cells to the web server 110 using the client 140. Thereby, the client can obtain a delivery plan showing the specification of the manufacturing machine of slightly acidic hypochlorous acid water including the electrolytic cells having the configurations suitable to the additional conditions.

Additionally, in the delivery plan presenting system 100, when a client buys a manufacturing machine of slightly acidic hypochlorous acid water, if the client wants to receive periodical maintenance service for the manufacturing machine of slightly acidic hypochlorous acid water, the client transmits to the web server 110 using the client 140, data indicating the address at which the manufacturing machine of slightly acidic hypochlorous acid water is to be installed. Upon receiving from the client 140, the data indicating the address at which the manufacturing machine of slightly acidic hypochlorous acid water is to be installed, the web server 110 specifies an estimated frequency at which a maintenance agency visits the address and maintains the manufacturing machine of slightly acidic hypochlorous acid water, based on the information concerning the address at which the manufacturing machine of slightly acidic hypochlorous acid water is to be installed. Then, based on the estimated frequency of maintaining the manufacturing machine of slightly acidic hypochlorous acid water which is specified in this manner, and the maximum value of the operating time per day of the manufacturing machine of slightly acidic hypochlorous acid water which is required by the client, the web server 110 calculates the total operating time estimated as an operating time of the manufacturing machine of slightly acidic hypochlorous acid water, in a period from the time when the maintenance is conducted by the maintenance agency to the time when the next maintenance is conducted. Then, the web server 110 determines, for each electrode plate, whether or not the lifetime of the electrode plate is longer than the total operating time calculated in this manner. Then, when the web server 110 calculates, for each electrode plate of multiple types, the estimated amount of chlorine to be generated per day in one electrolytic cell using two electrode plates, the web server 110 calculates, only for the electrode plate whose lifetime is determined to be longer than the total operating time, the estimated amount of chlorine based further on the lifetime of that electrode plate and the calculated total operating time. Then, the web server 110 generates a delivery plan of the manufacturing machine of slightly acidic hypochlorous acid water in the above manner, and transmits to the client 140, a web page showing that delivery plan.

Thus, when a client buys a manufacturing machine of slightly acidic hypochlorous acid water, if the client wants to receive periodical maintenance service for the manufacturing machine of slightly acidic hypochlorous acid water, the client transmits to the web server 110 using the client 140, data indicating the address at which the manufacturing machine of slightly acidic hypochlorous acid water is to be installed. Thereby, the client can obtain a delivery plan showing the specification of the manufacturing machine of slightly acidic hypochlorous acid water including the electrolytic cell having the configuration suitable to receiving the periodical maintenance service.
Here, the address may be an example of an "address" of the present invention.

Additionally, in the delivery plan presenting system 100, based on the number of electrode plates calculated in the above manner for each electrode plate and the price of each electrode plate, the web server 100 calculates the price of each electrolytic cell to be constituted by that electrode plate. Then, if the condition for the manufacturing machine of slightly acidic hypochlorous acid water which is emphasized by the client is that the price of the manufacturing machine of slightly acidic hypochlorous acid water be cheaper, the web server 110 selects at least one specification of an electrolytic cell that is cheaper in price, based on the price of each electrolytic cell calculated in this manner. Then, the web server 110 generates a delivery plan of the manufacturing machine of slightly acidic hypochlorous acid water in the above manner, and transmits to the client 140, a web page showing that delivery plan.

Thus, when a client buys a manufacturing machine of slightly acidic hypochlorous acid water, if the client further requires that the price of the manufacturing machine of slightly acidic hypochlorous acid water be cheaper, the client transmits to the web server 110 using the client 140, data indicating that requirement. Thereby, the client can obtain a delivery plan showing the specification of the manufacturing machine of slightly acidic hypochlorous acid water including the electrolytic cell having the configuration suitable to that condition.

Additionally, in the delivery plan presenting system 100, based on the number of electrode plates calculated in the above manner for each electrode plate, and the dimensions of each electrode plate, the web server 110 calculates the dimension of each electrolytic cell to be constituted by the electrode plate. Then, if the condition for the manufacturing machine of slightly acidic hypochlorous acid water which is emphasized by the client is that the dimensions of the manufacturing machine of slightly acidic hypochlorous acid water be smaller, the web server 110 selects at least one specification of an electrolytic cell that is smaller in dimension, based on the dimensions of each electrolytic cell calculated in this manner. Then, the web server 110 generates a delivery plan of the manufacturing machine of slightly acidic hypochlorous acid water in the above manner, and transmits to the client 140, a web page showing that delivery plan.

As another embodiment, in lieu of, or in addition to, the dimensions, the weight of the electrolytic cell may be calculated. Specifically, in this other embodiment, the weight of the electrolytic cell may be calculated based on the calculated number of electrode plates and the weight of each electrode plate, and the calculated weight may be considered in selecting the specification. Such a method is useful in a case where an electrolytic cell is installed on a wall or in a case where an electrolytic cell is transported.

Thus, when a client buys a manufacturing machine of slightly acidic hypochlorous acid water, if the client further requires that the dimensions of the manufacturing machine of slightly acidic hypochlorous acid water be smaller, the client transmits to the web server 110 using the client 140, data indicating that requirement. Thereby, the client can obtain a delivery plan showing the specification of the manufacturing machine of slightly acidic hypochlorous acid water including the electrolytic cell having the configuration suitable to that condition.

Additionally, if the condition for the manufacturing machine of slightly acidic hypochlorous acid water which is emphasized by the client is that the lifetime of the manufacturing machine of slightly acidic hypochlorous acid water be longer, the web server 110 selects at least one specification of an electrolytic cell that is longer in lifetime, when selecting a specification of an electrolytic cell. Then, the web server 110 generates a delivery plan of the manufacturing machine of slightly acidic hypochlorous acid water in the above manner, and transmits to the client 140, a web page showing that delivery plan.

Thus, when a client buys a manufacturing machine of slightly acidic hypochlorous acid water, if the client further requires that the lifetime of the manufacturing machine of slightly acidic hypochlorous acid water be longer, the client transmits to the web server 110 using the client 140, data indicating that requirement. Thereby, the client can obtain a delivery plan showing the specification of the manufacturing machine of slightly acidic hypochlorous acid water including the electrolytic cell having the configuration suitable to that condition.

Additionally, in the delivery plan presenting system 100, when the web server 110 generates a delivery plan of the manufacturing machine of slightly acidic hypochlorous acid water, the web server 110 generates a delivery plan that further presents the price of the manufacturing machine of slightly acidic hypochlorous acid water, which is determined based on the price of the electrolytic cell with the specification selected in the above manner from among the prices of the respective electrolytic cells calculated in the above manner, and which includes that electrolytic cell. Then, the web server 110 transmits to the client 140, the web page showing the delivery plan generated in this manner.

Thus, when a client buys a manufacturing machine of slightly acidic hypochlorous acid water, the client transmits data indicating the required condition to the web server 110 using the client 140. Thereby, the client can obtain a delivery plan further showing the price of the manufacturing machine of slightly acidic hypochlorous acid water including the electrolytic cell having the configuration suitable to that condition.

Additionally, in the delivery plan presenting system 100, when the web server 110 generates a delivery plan of the manufacturing machine of slightly acidic hypochlorous acid water, the web server 110 generates a delivery plan that further presents the dimensions of the manufacturing machine of slightly acidic hypochlorous acid water, which is determined based on the dimensions of the electrolytic cell with the specification selected in the above manner from among the dimensions of the respective electrolytic cells calculated in the above manner and which includes that electrolytic cell. Then, the web server 110 transmits to the client 140, the web page showing the delivery plan generated in this manner.

Thus, when a client buys the manufacturing machine of slightly acidic hypochlorous acid water, the client transmits data indicating the required condition to the web server 110 using the client 140. Thereby, the client can obtain a delivery plan further showing the dimensions of the manufacturing machine of slightly acidic hypochlorous acid water including the electrolytic cell having the configuration suitable to that condition.

Additionally, when the web server 110 generates a delivery plan of the manufacturing machine of slightly acidic hypochlorous acid water, the web server 110 generates a delivery plan that further presents the estimated frequency of maintaining the manufacturing machine of slightly acidic hypochlorous acid water specified in the above manner, and the cost of the maintenance. Then, the web server 110 transmits to the client 140, a web page showing the delivery plan generated in this manner.

Thus, when a client buys the manufacturing machine of slightly acidic hypochlorous acid water, the client transmits data indicating the required condition to the web server 110 using the client 140. Thereby, the client can obtain a delivery plan further showing the estimated frequency of maintaining the manufacturing machine of slightly acidic hypochlorous acid water including the electrolytic cell having the configuration suitable to that condition.

In the present embodiment, for simplification of explanations, the configuration of the delivery plan presenting system 100 including only one web server 110 has been explained. However, the delivery plan presenting system 100 may include multiple web servers 110.

FIG. 2 illustrates an example of a block configuration of the web server 110. The web server 110 includes: an electrode plate information data storage unit 111; a maintenance contractors information data storage unit 112; a required condition data entry unit 113; a required amount calculating unit 114; a maintenance frequency specifying unit 115; a total operating time calculating unit 116; a lifetime evaluation unit 117; a generated amount calculating unit 118; a calculating unit of the number of electrode plates 119; a price calculating unit 120; a dimensions calculating unit 121; a specification selecting unit 122; a delivery plan generating unit 123; and a delivery plan data output unit 124. Hereinafter, the function and operation of each constituent element are explained.

The required condition data entry unit 113 receives an input of data indicating conditions required by a client when the client buys a manufacturing machine of slightly acidic hypochlorous acid water. Specifically, upon receiving from the client 140, the data indicating conditions required by a client when the client buys a manufacturing machine of slightly acidic hypochlorous acid water, the required condition data entry unit 113 receives an input of that data. Then, the required condition data entry unit 113 outputs to the required amount calculating unit 114, data indicating the concentration of chlorine in slightly acidic hypochlorous acid water which is required by the client, and the maximum value of the amount of slightly acidic hypochlorous acid water manufactured per day which is required by the client. On the other hand, if the conditions indicated by the received data include the maximum value of the amount of slightly acidic hypochlorous acid water manufactured per day which is required by the client, the required condition data entry unit 113 outputs to the required amount calculating unit 114, data indicating the concentration of chlorine in slightly acidic hypochlorous acid water which is required by the client, the maximum value of the amount of slightly acidic hypochlorous acid water manufactured per hour which is required by the client, and the maximum value of the operating time per day of the manufacturing machine of slightly acidic hypochlorous acid water which is required by the client, which are included in the conditions indicated by the received data. If the conditions indicated by the received data include the number of electrolytic cells which is required by the client, the required condition data entry unit 113 also outputs the data indicating the number of electrolytic cells to the required amount calculating unit 114. Additionally, the required condition data entry unit 113 outputs to the generated amount calculating unit 118, data indicating the maximum value of the operating time per day of the manufacturing machine of slightly acidic hypochlorous acid water which is required by the client, which is included in the conditions indicated by the received data. Further, if the conditions indicated by the received data include information concerning the address at which the manufacturing machine of slightly acidic hypochlorous acid water is to be installed, the required condition data entry unit 113 outputs to the maintenance frequency specifying unit 115, data indicating information concerning the address at which the manufacturing machine of slightly acidic hypochlorous acid water is to be installed, which is included in the conditions indicated by the received data, and further outputs to the total operating time calculating unit 116, the data indicating the maximum value of the operating time per day of the manufacturing machine of slightly acidic hypochlorous acid water which is required by the client. If the conditions indicated by the received data include a condition for the manufacturing machine of slightly acidic hypochlorous acid water which is emphasized by the client, the required condition data entry unit 113 outputs to the specification selecting unit 122, data indicating the condition for the manufacturing machine of slightly acidic hypochlorous acid water emphasized by the client, which is included in the conditions indicated by the received data. Moreover, the required condition data entry unit 113 outputs to the delivery plan data output unit 124, data indicating the client 140 having transmitted the received data.

The required amount calculating unit 114 calculates the estimated amount of chlorine to be required per day, based on the concentration of chlorine in slightly acidic hypochlorous acid water which is required by the client, and the maximum value of the amount of slightly acidic hypochlorous acid water manufactured per day which is required by the client. Specifically, upon receiving from the required condition data entry unit 113, data indicating the concentration of chlorine in slightly acidic hypochlorous acid water which is required by the client, and the maximum value of the amount of slightly acidic hypochlorous acid water manufactured per day which is required by the client, the required amount calculating unit 114 calculates the estimated amount of chlorine to be required per day, based on the concentration of chlorine in slightly acidic hypochlorous acid water which is required by the client, and the maximum value of the amount of slightly acidic hypochlorous acid water manufactured per day which is required by the client, which are indicated by the received data. Then, the required amount calculating unit 114 outputs to the calculating unit of the number of electrode plates 119, data indicating the amount of chlorine calculated in this manner.

If the maximum value of the amount of slightly acidic hypochlorous acid water manufactured per hour is required by the client, the required amount calculating unit 114 calculates the maximum value of the amount of slightly acidic hypochlorous acid water manufactured per day, based on the maximum value of the amount of slightly acidic hypochlorous acid water manufactured per hour which is required by the client, and the maximum value of the operating time per day of the manufacturing machine of slightly acidic hypochlorous acid water which is required by the client. Then, the required amount calculating unit 114 calculates the estimated amount of chlorine to be required per day, based on the maximum value of the amount of slightly acidic hypochlorous acid water manufactured per day which is calculated in this manner, and the amount of chlorine in slightly acidic hypochlorous acid water which is required by the client. Specifically, upon receiving from the required condition data entry unit 113, the amount of chlorine in slightly acidic hypochlorous acid water which is required by the client, the maximum value of the amount of slightly acidic hypochlorous acid water manufactured per hour which is required by the client, and the maximum value of the operating time per day of the manufacturing machine of slightly acidic hypochlorous acid water which is required by the client, the required amount calculating unit 114 calculates the maximum value of the amount of slightly acidic hypochlorous acid water manufactured per day, based on the maximum value of the amount of slightly acidic hypochlorous acid water manufactured per hour which is required by the client, and the maximum value of the operating time per day of the manufacturing machine of slightly acidic hypochlorous acid water which is required by the client, which are indicated by the received data. Then, the required amount calculating unit 114 calculates the estimated amount of chlorine to be required per day, based on the maximum value of the amount of slightly acidic hypochlorous acid water manufactured per day which is calculated in the above manner, and the amount of chlorine in slightly acidic hypochlorous acid water which is required by the client, which is indicated by the data received from the required condition data entry unit 113. Then, the required amount calculating unit 114 outputs to the calculating unit of the number of electrode plates 119, data indicating the amount of chlorine calculated in this manner.

Additionally, in a case where the client requires that multiple electrolytic cells be used, the required amount calculating unit 114 divides the maximum value of the amount of slightly acidic hypochlorous acid water manufactured per day which is required by the client, by the number of electrolytic cells required by the client, to obtain a value as the maximum value of the amount of slightly acidic hypochlorous acid water manufactured per day which is required by the client, thus calculating the estimated amount of chlorine to be required per day. Specifically, upon receiving from the required condition data entry unit 113, data indicating the number of electrolytic cells which is required by the client, the required amount calculating unit 114 divides the maximum value of the amount of slightly acidic hypochlorous acid water manufactured per day which is required by the client, by the number of electrolytic cells required by the client, to obtain a value as the maximum value of the amount of slightly acidic hypochlorous acid water manufactured per day which is required by the client, thus calculating the estimated amount of chlorine to be required per day. Then, the required amount calculating unit 114 outputs to the calculating unit of the number of electrode plates 119, data indicating the amount of choline calculated in this manner.

Based on information concerning the address at which the manufacturing machine of slightly acidic hypochlorous acid water is to be installed, the maintenance frequency specifying unit 115 specifies the estimated frequency at which the maintenance agency visits the address and maintains the manufacturing machine of slightly acidic hypochlorous acid water. Specifically, upon receiving from the required condition data entry unit 113, data indicating information concerning the address at which the manufacturing machine of slightly acidic hypochlorous acid water is to be installed, the maintenance frequency specifying unit 115 specifies the estimated frequency at which the maintenance agency visits the address and maintains the manufacturing machine of slightly acidic hypochlorous acid water, based on the information concerning the address at which the manufacturing machine of slightly acidic hypochlorous acid water is to be installed, which is indicated by the received data, and information stored by the maintenance contractors information data storage unit 112. Then, the maintenance frequency specifying unit 115 outputs to the total operating time calculating unit 116 and the delivery plan generating unit 123, data indicating the estimated frequency of maintaining the manufacturing machine of slightly acidic hypochlorous acid water which is specified in this manner.

Based on the estimated frequency of maintaining the manufacturing machine of slightly acidic hypochlorous acid water which is specified by the maintenance frequency specifying unit 115, and the maximum value of the operating time per day of the manufacturing machine of slightly acidic hypochlorous acid water which is required by the client, the total operating time calculating unit 116 calculates the total operating time that can be estimated as an operating time of the manufacturing machine of slightly acidic hypochlorous acid water, in a period from the time when the manufacturing machine of slightly acidic hypochlorous acid water is maintained by the maintenance agency to the time when the manufacturing machine of slightly acidic hypochlorous acid water is next maintained. Specifically, upon receiving from the required condition data entry unit 113, data indicating the maximum value of the operating time per day of the manufacturing machine of slightly acidic hypochlorous acid water which is required by the client, and receiving from the maintenance frequency specifying unit 115, data indicating the estimated frequency of maintaining the manufacturing machine of slightly acidic hypochlorous acid water which is specified by the maintenance frequency specifying unit 115, the total operating time calculating unit 116 calculates the total operating time that can be estimated as an operating time of the manufacturing machine of slightly acidic hypochlorous acid water, in a period from the time when the manufacturing machine of slightly acidic hypochlorous acid water is maintained by the maintenance agency to the time when the manufacturing machine of slightly acidic hypochlorous acid water is next maintained, based on the estimated frequency of maintaining the manufacturing machine of slightly acidic hypochlorous acid water which is specified by the maintenance frequency specifying unit 115, and the maximum value of the operating time per day of the manufacturing machine of slightly acidic hypochlorous acid water which is required by the client, which are indicated by the received data. Then, the total operating time calculating unit 116 outputs to the lifetime evaluation unit 117, data indicating the total operating time calculated in this manner.

The lifetime evaluation unit 117 determines whether or not the lifetime of the electrode plate is longer than the total operating time calculated by the total operating time calculating unit 116 for each electrode plate of multiple types selectable as an electrode plate of an electrolytic cell of slightly acidic hypochlorous acid water. Specifically, upon receiving the data indicating the total operating time from the total operating time calculating unit 116, the lifetime evaluation unit 117 determines, based on the information stored by the electrode plate information data storage unit 111, whether or not the lifetime of the electrode plate is longer than the total operating time calculated by the total operating time calculating unit 116 for each electrode plate of multiple types selectable as an electrode plate of an electrolytic cell of slightly acidic hypochlorous acid water. Then, if it is determined that the lifetime of the electrode plate is longer than the total operating time, the lifetime evaluation unit 117 outputs to the generated amount calculating unit 118, data indicating that electrode plate having been subjected to the determination.

Based on the area, the current efficiency, and the optimal current density of the electrode plate, the maximum value of the operating time per day of the manufacturing machine of slightly acidic hypochlorous acid water which is required by the client, and the electrochemical equivalent of chlorine, the generated amount calculating unit 118 calculates the estimated amount of chlorine to be generated per day in one electrolytic cell using two electrode plates, for each electrode plate of multiple types selectable as an electrode plate of an electrolytic cell of slightly acidic hypochlorous acid water. Specifically, upon receiving from the required condition data entry unit 113, the data indicating the maximum value of the operating time per day of the manufacturing machine of slightly acidic hypochlorous acid water which is required by the client, the generated amount calculating unit 118 calculates the estimated amount of chlorine to be generated per day in one electrolytic cell using two electrode plates, for each electrode plate of multiple types selectable as an electrode plate of an electrolytic cell of slightly acidic hypochlorous acid water, based on the maximum value of the operating time per day of the manufacturing machine of slightly acidic hypochlorous acid water which is required by the client, and the electrochemical equivalent of chlorine, which are indicated by the received data. Then, the generated amount calculating unit 118 outputs to the calculating unit of the number of electrode plates 119, data indicating the estimated amount of chlorine calculated in this manner for each electrode plate.

Additionally, only for the electrode plate determined by the lifetime evaluation unit 117 to be longer in lifetime than the total operating time, the generated amount calculating unit 118 calculates the amount of chlorine based further on the lifetime of that electrode plate and the total operating time calculated by the total operating time calculating unit 116. Specifically, upon receiving the data indicating the total operating time from the total operating time calculating unit 116, and receiving the data indicating the electrode plate from the lifetime evaluation unit 117, only for the electrode plate indicated by the data received from the lifetime evaluation unit 117, the generated amount calculating unit 118 calculates the estimated amount of chlorine to be generated per day in one electrolytic cell using two electrode plates, based further on the total operating time indicated by the data received from the total operating time calculating unit 116. Then, the generated amount calculating unit 118 outputs to the calculating unit of the number of electrode plates 119, data indicating the amount of chlorine calculated in this manner for each electrode plate.

Based on the amount of chlorine calculated by the required amount calculating unit 114 and the amount of chlorine calculated for each electrode plate by the generated amount calculating unit 118, the calculating unit of the number of electrode plates 119 calculates, for each electrode plate, the number of electrode plates required to generate per day the amount of choline calculated by the required amount calculating unit 114. Specifically, upon receiving from the required amount calculating unit 114, data indicating the estimated amount of chlorine to be required per day, and receiving from the generated amount calculating unit 118, data indicating the amount of chlorine calculated for each electrode plate, the calculating unit of the number of electrode plates 119 calculates, for each electrode plate having been subjected to the calculation of the amount of chlorine performed by the generated amount calculating unit 118, the number of electrode plates required to generate per day the amount of choline calculated by the required amount calculating unit 114, based on the estimated amount of chlorine to be required per day and the amount of chlorine calculated for each electrode plate, which are indicated by the received data. Then, the calculating unit of the number of electrode plates 119 outputs data indicating the number of electrode plates calculated in this manner for each electrode plate, to the price calculating unit 120, the dimensions calculating unit 121, and the delivery plan generating unit 123.

Based on the number of electrode plates calculated for each electrode plate by the calculating unit of the number of electrode plates 119 and the price of each electrode plate, the price calculating unit 120 calculates the price of each electrolytic cell to be constituted by the electrode plate. Specifically, upon receiving from the calculating unit of the number of electrode plates 119, data indicating the number of electrode plates calculated for each electrode plate, the price calculating unit 120 calculates the price of each electrolytic cell to be constituted by the electrode plate, based on the number of electrode plates calculated for each electrode plate which is indicated by the received data and the information stored by the electrode plate information data storage unit 111. Then, the price calculating unit 120 outputs to the specification selecting unit 122 and the delivery plan generating unit 123, data indicating the price of each electrolytic cell to be constituted by the electrode plate.

Based on the number of electrode plates calculated for each electrode plate by the calculating unit of the number of electrode plates 119, the dimensions of each electrode plate, the dimensions calculating unit 121 calculates the dimensions of each electrolytic cell to be constituted by the electrode plate. Specifically, upon receiving from the number of electrode plates 119, data indicating the number of electrode plates calculated for each electrode plate, the dimensions calculating unit 121 calculates the dimensions of each electrolytic cell to be constituted by the electrode plate, based on the number of electrode plates calculated for each electrode plate which is indicated by the received data, and the information stored by the electrode plate information data storage unit 111. Then, the price calculating unit 120 outputs data indicating the dimensions of each electrolytic cell to be constituted by the electrode plate, to the specification selecting unit 122 and the delivery plan generating unit 123.

Based on the condition for the manufacturing machine of slightly acidic hypochlorous acid water which is emphasized by the client, the specification selecting unit 122 selects at least one specification of an electrolytic cell from among the specifications of electrolytic cells to be constituted by each electrode plate. Specifically, upon receiving from the required condition data entry unit 113, data indicating the condition for the manufacturing machine of slightly acidic hypochlorous acid water which is emphasized by the client, the specification selecting unit 122 selects at least one specification of an electrolytic cell from among the specifications of electrolytic cells that can be constituted by each electrode plate, based on the condition for the manufacturing machine of slightly acidic hypochlorous acid water which is emphasized by the client.

If the condition for the manufacturing machine of slightly acidic hypochlorous acid water which is emphasized by the client is that the price of the manufacturing machine of slightly acidic hypochlorous acid water which be cheaper, the specification selecting unit 122 selects at least one specification of an electrolytic cell that is cheaper in price based on the price of each electrolytic cell calculated by the price calculating unit 120. Specifically, upon receiving from the required condition data entry unit 113, data indicating the condition that the price of the manufacturing machine of slightly acidic hypochlorous acid water be cheaper, as the condition for the manufacturing machine of slightly acidic hypochlorous acid water which is emphasized by the client, and receiving from the price calculating unit 120, data indicating the price of each electrolytic cell, the specification selecting unit 122 selects at least one specification of an electrolytic cell that is cheaper in price based on the price of each electrolytic cell which is indicated by the data received from the price calculating unit 120. Then, the specification selecting unit 122 outputs to the delivery plan generating unit 123, data indicating which of the specifications of electrolytic cells the specification selecting unit 122 has selected.

If the condition for the manufacturing machine of slightly acidic hypochlorous acid water which is emphasized by the client is that the dimensions of the manufacturing machine of slightly acidic hypochlorous acid water be smaller, the specification selecting unit 122 selects at least one specification of an electrolytic cell that is smaller in dimension, based on the dimensions of each electrolytic cell calculated by the dimensions calculating unit 121. Specifically, upon receiving from the required condition data entry unit 113, data indicating the condition that the dimensions of the manufacturing machine of slightly acidic hypochlorous acid water be smaller, as the condition for the manufacturing machine of slightly acidic hypochlorous acid water which is emphasized by the client, and receiving from the dimensions calculating unit 121, data indicating the dimensions of each electrolytic cell, the specification selecting unit 122 selects at least one specification of an electrolytic cell that is smaller in dimension based on the dimensions of each electrolytic cell, which is indicated by the data received from the dimensions calculating unit 121. Then, the specification selecting unit 122 outputs to the delivery plan generating unit 123, data indicating which of the specifications of electrolytic cells the specification selecting unit 122 has selected.

If the condition for the manufacturing machine of slightly acidic hypochlorous acid water which is emphasized by the client is that the lifetime of the manufacturing machine of slightly acidic hypochlorous acid water be longer, the specification selecting unit 122 selects at least one specification of an electrolytic cell which is longer in lifetime. Specifically, upon receiving from the required condition data entry unit 113, data indicating the condition that the lifetime of the manufacturing machine of slightly acidic hypochlorous acid water be longer, as the condition for the manufacturing machine of slightly acidic hypochlorous acid water which is emphasized by the client, the specification selecting unit 122 selects at least one specification of an electrolytic cell that is longer in lifetime based on the information stored by the electrode plate information data storage unit 111. Then, the specification selecting unit 122 outputs to the delivery plan generating unit 123, data indicating which of the specifications of electrolytic cells the specification selecting unit 122 has selected.

The delivery plan generating unit 123 generates a delivery plan presenting the selected specification of the electrolytic cell including information concerning the number of electrode plates of the electrolytic cell with the specification selected by the specification selecting unit 122, which is one of the numbers of electrode plates calculated for each electrode plate by the calculating unit of the number of electrode plates 119, or the specification of the manufacturing machine of slightly acidic hypochlorous acid water including that electrolytic cell. Specifically, upon receiving from the calculating unit of the number of electrode plates 119, data indicating the number of electrode plates calculated for each electrode plate, and receiving from the specification selecting unit 122, data indicating the specification of the selected electrolytic cell, the delivery plan generating unit 123 generates a delivery plan presenting the selected specification of the electrolytic cell including information concerning the number of electrode plates of the electrolytic cell with the selected specification which is indicated by the data received from the specification selecting unit 122, which is one of the numbers of electrode plates calculated for each electrode plate which is indicated by the data received from the calculating unit of the number of electrode plates 119, or a delivery plan presenting the specification of the manufacturing machine of slightly acidic hypochlorous acid water including that electrolytic cell. Then, the delivery plan generating unit 123 outputs to the delivery plan data output unit 124, a web page presenting the delivery plan generated in this manner.

Additionally, the delivery plan generating unit 123 generates a delivery plan that presents the price of the manufacturing machine of slightly acidic hypochlorous acid water including the electrolytic cell determined based on the price of the electrolytic cell with the specification selected by the specification selecting unit 122, that price being one of the prices calculated by the price calculating unit 120. Specifically, upon receiving from the price calculating unit 120, data indicating the price of each configurable electrolytic cell, and receiving from the specification selecting unit 122, data indicating the specification of the selected electrolytic cell, the delivery plan generating unit 123 generates a delivery plan that presents the price of the manufacturing machine of slightly acidic hypochlorous acid water including the electrolytic cell determined based on the price of the electrolytic cell with the selected specification indicated by the data received from the specification selecting unit 122, that price being one of the prices of the respective configurable electrolytic cells which are indicated by the data received from the price calculating unit 120. Then, the delivery plan generating unit 123 outputs to the delivery plan data output unit 124, a web page presenting the delivery plan generated in this manner.

Additionally, the delivery plan generating unit 123 generates a delivery plan that further presents the dimensions of the manufacturing machine of slightly acidic hypochlorous acid water including the electrolytic cell determined based on the dimensions of the electrolytic cell with the specification selected by the specification selecting unit 122, those dimensions being one of the dimensions of the respective electrolytic cells calculated by the dimensions calculating unit 121. Specifically, upon receiving from the dimensions calculating unit 121, data indicating the dimensions of each configurable electrolytic cell, and receiving from the specification selecting unit 122, data indicating the specification of the selected electrolytic cell, the delivery plan generating unit 123 generates a delivery plan that further presents the dimension of the manufacturing machine of slightly acidic hypochlorous acid water including the electrolytic cell determined based on the dimension of the electrolytic cell with the selected specification indicated by the data received from the specification selecting unit 122, those dimensions being one of the dimensions of the respective configurable electrolytic cells which are indicated by the data received from the dimensions calculating unit 121. Then, the delivery plan generating unit 123 outputs to the delivery plan data output unit 124, a web page presenting the delivery plan generated in this manner.

Additionally, the delivery plan generating unit 123 generates a delivery plan that further presents the estimated frequency of maintaining the manufacturing machine of slightly acidic hypochlorous acid water which is specified by the maintenance frequency specifying unit 115. Specifically, upon receiving from the maintenance frequency specifying unit 115, data indicating the estimated frequency of maintaining the manufacturing machine of slightly acidic hypochlorous acid water, the delivery plan generating unit 123 generates a delivery plan that further presents the estimated frequency of maintaining the manufacturing machine of slightly acidic hypochlorous acid water, which is indicated by the received data. Then, the delivery plan generating unit 123 outputs to the delivery plan data output unit 124, a web page presenting the delivery plan generated in this manner.

The delivery plan data output unit 124 outputs the web page showing the delivery plan generated by the delivery plan generating unit 123. Specifically, upon receiving data indicating the client 140 from the required condition data entry unit 113, and receiving the web page showing the delivery plan from the delivery plan generating unit 123, the delivery plan data output unit 124 outputs to the client 140 indicated by the data received from the required condition data entry unit 113, the web page showing the delivery plan received from the delivery plan generating unit 123.

FIG. 3 illustrates, in table form, an example of information stored by the electrode plate information data storage unit 111 of the web server 110. The electrode plate information data storage unit 111 stores the electrode plate ID (identifier) , the area, the current efficiency, the optimal current density, the lifetime, and the price, while correlating those items to one another.

The electrode plate ID is an identification code that uniquely identifies one of electrode plates of multiple types selectable as electrodes of an electrolytic cell included in the manufacturing machine of slightly acidic hypochlorous acid water. The area is a value indicating the area of a plate surface of the electrode plate identified by the electrode plate ID. The current efficiency is a value indicating the rate of current to be used for the intended electrode reaction, that current being one of currents passing the electrode plate identified by the electrode ID. The optimal current density is a value indicating the amount of current per unit area of the electrode, which is optimal to invoke the intended electrode reaction. The lifetime is a value indicating the lifetime of the electrode plate identified by the electrode ID when the current of the value indicated by the optimal current density flows. The price is the price of the electrode plate identified by the electrode plate ID. Here, the price of an electrode plate with an electrode bar may differ from the price of an electrode plate disposed between two electrode plates with electrode bars.

FIG. 4 illustrates, in table form, an example of information stored by the maintenance contractors information data storage unit 112 of the web server 110. The maintenance contractors information data storage unit 112 stores the contractor ID, the contractor name, the service area, and the maintenance frequency, while correlating those items to one another.

The contractor ID is an identification code that uniquely identifies one of multiple maintenance contractors that maintain the manufacturing machine of slightly acidic hypochlorous acid water. The contractor name is a character string indicating the name of the maintenance contractor identified by the contractor ID. The service area is information indicating the area in which the maintenance contractor identified by the contractor ID can maintain the manufacturing machine of slightly acidic hypochlorous acid water. The maintenance frequency is information indicating the frequency at which the maintenance contractor identified by the contractor ID can maintain the manufacturing machine of slightly acidic hypochlorous acid water. In this example, the maintenance frequency indicates at intervals of what days the maintenance contractor identified by the contractor ID can maintain the manufacturing machine of slightly acidic hypochlorous acid water.

FIG. 5 illustrates an example of the web page 180 for inputting required conditions when a client buys a manufacturing machine of slightly acidic hypochlorous acid water. The web page 180 includes: text boxes 181 to 184; list boxes 185, 187, and 188; a radio button 186; and a button 189.

The text box 181 is an input region for inputting character information indicating the concentration of chlorine in slightly acidic hypochlorous acid water. The text box 182 is an input region for inputting character information indicating the maximum value of the amount of slightly acidic hypochlorous acid water manufactured per day. The text box 183 is an input region for inputting character information indicating the maximum value of the amount of slightly acidic hypochlorous acid water manufactured per hour. The text box 184 is an input region for inputting character information indicating the maximum value of the operating time per day of the manufacturing machine of slightly acidic hypochlorous acid water. The list box 185 is a strip input region for selecting one of options of addresses as the address at which the manufacturing machine of slightly acidic hypochlorous acid water is to be installed.

The radio button 186 is input means for selecting only one of options of the price, the dimensions, and the lifetime of the manufacturing machine of slightly acidic hypochlorous acid water, which are conditions empathized by the client when the client buys the manufacturing machine of slightly acidic hypochlorous acid water. The list box 187 is a strip input region for selecting one of options of the numbers of electrolytic cells, which is desired by the client. The list box 188 is a strip input region for selecting one of options of the numbers of delivery plans of the manufacturing machine of slightly acidic hypochlorous acid water, which is desired by the client. The button 189 is a GUI (graphical user interface) for transmitting to the web server 110, the contents data input to the text boxes 181 to 184, the list boxes 185, 187, and 188, and the radio button 186 by operation of a pointing device while a cursor is placed on the button 189.

FIG. 6 illustrates an example of a web page 190 generated by the delivery plan generating unit 123 of the web server 110. The web page 190 presents the number of electrode plates to be used in the electrolytic cell, the dimension of the manufacturing machine of slightly acidic hypochlorous acid water, the price of the manufacturing machine of slightly acidic hypochlorous acid water, and the maintenance frequency.

FIG. 7 illustrates an example of an operational sequence for the web server 110 and the client 140. Explanations of the operational sequence are given here with reference to FIGS. 1 to 6.

When a client or salesman wants to obtain a delivery plan using the delivery plan presenting system 100, the client or salesman accesses, using the client 140, the web site provided by the web server 110. At this time, for example, the web page 180 as shown in FIG. 5 is shown on a display of the client 140. The client inputs required conditions in the text boxes 181 to 184, the list boxes 185, 187, and 188, and the radio button 186, which are provided on the web page 180. It is assumed in this example that "20 (ppm (mg/L))" is input in the text box 181, "6000 (L)" is input to the text box 182, "700 (L/h)" is input to the text box 183, and "10 (h)" is input to the text box 184. It is further assumed in this example that "Tokyo-to" is selected from the options of the list box 185. It is further assumed in this example that "Price" is selected from the options of the radio button 186. It is further assumed in this example that "1" is selected from the options of the radio button 187. It is further assumed in this example that "1" is selected from the options of the list box 188. Then, the client operates a pointing device to give an instruction while placing a cursor on the button 189. Thus, the client 140 receives an input of data indicating the conditions required by the client.

Then, the client transmits to the web server 110, the data received in the above manner (S101) . Upon receiving from the client 140, the data indicating the conditions required by the client, the required condition data entry unit 113 of the web server 110 receives an input of that data. The required condition data entry unit 113 outputs to the delivery plan data output unit 124, data indicating an IP (Internet Protocol) address of the client 140 having transmitted the received data. Additionally, the required condition data entry unit 113 outputs to the generated amount calculating unit 118, data indicating the maximum value "10 (h) " of the operating time per day of the manufacturing machine of slightly acidic hypochlorous acid water which is required by the client. In this example, the conditions indicated by the received data include the maximum value "700 (L/h) " of the amount of slightly acidic hypochlorous acid water manufactured per hour which is required by the client. Accordingly, the required condition data entry unit 113 outputs to the required amount calculating unit 114, the concentration "20 (ppm (mg/L) ) " of chlorine in slightly acidic hypochlorous acid water which is required by the client, the maximum value "700 (L/h) " of the amount of slightly acidic hypochlorous acid water manufactured per hour which is required by the client, and the maximum value "10 (h) " of the operating time per day of the manufacturing machine of slightly acidic hypochlorous acid water which is required by the client. Additionally, in this example, the conditions indicated by the received data include the information "Tokyo- to" that is the address at which the manufacturing machine of slightly acidic hypochlorous acid water is to be installed. Accordingly, the required condition data entry unit 113 outputs to the maintenance frequency specifying unit 115, data indicating the information "Tokyo-to" that is the address at which the manufacturing machine of slightly acidic hypochlorous acid water is to be installed, and output to the total operating time calculating unit 116, data indicating the maximum value "10 (h) " of the operating time per day of the manufacturing machine of slightly acidic hypochlorous acid water which is required by the client. Further, in this example, the conditions indicated by the received data include the number of required electrolytic cells "1". Accordingly, the required condition data entry unit 113 outputs to the required amount calculating unit 114, data indicating the number of required electrolytic cells "1". Moreover, in this example, the conditions indicated by the received data include the "price" as the condition for the manufacturing machine of slightly acidic hypochlorous acid water which is emphasized by the client. Accordingly, the required condition data entry unit 113 outputs to the specification selecting unit 122, data indicating the condition "price" as the condition for the manufacturing machine of slightly acidic hypochlorous acid water which is emphasized by the client, and the number of delivery plans of the manufacturing machine of slightly acidic hypochlorous acid water "1" which is required by the client.

Upon receiving from the required condition data entry unit 113, data indicating: the concentration "20 (ppm (mg/L))" of chlorine in slightly acidic hypochlorous acid water which is required by the client; the maximum value "700 (L/h)" of the amount of slightly acidic hypochlorous acid water manufactured per hour which is required by the client; and the maximum value "10 (h)" of the operating time per day of the manufacturing machine of slightly acidic hypochlorous acid water which is required by the client; and the number of required electrolytic cells "1", the required amount calculating unit 114 calculates the maximum value of the amount of slightly acidic hypochlorous acid water manufactured per day, based on the maximum value "700 (L/h)" of the amount of slightly acidic hypochlorous acid water manufactured per hour which is required by the client, and the maximum value "10 (h)" of the operating time per day of the manufacturing machine of slightly acidic hypochlorous acid water which is required by the client. For example, the required amount calculating unit 114 calculates the maximum value of the amount of slightly acidic hypochlorous acid water manufactured per day, as in the following Formula (1).

[Formula 1]

$$\text{Maximum value of manufacturing amount per day (L)}=\text{Maximum value of manufacturing amount per hour (L/h)}\times \text{Maximum value of operating time per day (h)} \qquad (1)$$

In this example, the maximum value of the amount of slightly acidic hypochlorous acid water manufactured per day is 700 (L/h)×10 (h)=7000 (L). Then, the required amount calculating unit 114 calculates the estimated amount of chlorine to be required per day, based on the maximum value "7000 (L)" of the amount of slightly acidic hypochlorous acid water manufactured per day which is calculated in this manner, the concentration "20 (ppm (mg/L))" of chlorine in slightly acidic hypochlorous acid water which is required by the client, and the number of required electrolytic cell "1 (cell)" (S 102). For example, the required amount calculating unit 114 calculates the estimated amount of chlorine to be required per day, as in the following Formula (2).

[Formula 2]

$$\text{Estimated amount of available chlorine to be required per day (g)}=\text{Concentration of available chlorine (ppm (mg/L))}\times\text{Maximum value of manufacturing amount per day (L)/Number of electrolytic cells (cell)/1000} \qquad (2)$$

In this example, the estimated amount of chlorine to be required per day is 20 (ppm (mg/L) ) ×7000 (L) / 1 (cell) / 1000=140 (g) . Then, the required amount calculating unit 114 outputs to the calculating unit of the number of electrode plates 119, data indicating the estimated amount "140 (g) " of chlorine to be required per day.

On the other hand, upon receiving from the required condition data entry unit 113, data indicating information "Tokyo-to" that is the address at which the manufacturing machine of slightly acidic hypochlorous acid water is to be installed, the maintenance frequency specifying unit 115 specifies the estimated frequency at which the maintenance agency visits "Tokyo-to" and maintains the manufacturing machine of slightly acidic hypochlorous acid water, based on the information "Tokyo-to" that is the address at which the manufacturing machine of slightly acidic hypochlorous acid water is to be installed, and the information stored by the maintenance contractors information data storage unit 112 (step S103). For example, in a case where the maintenance contractors information data storage unit 112 stores the information as shown in FIG. 4, the maintenance frequency specifying unit 115 specifies a record stored in association with the "Tokyo-to" as service area information. In this example, "Tokyo-to" is stored as service area information in the record of the contractor ID "m001". Accordingly, the maintenance frequency specifying unit 115 specifies "365 (day/ time)" as maintenance frequency information in the record of the contractor ID "m001". Then, the maintenance frequency specifying unit 115 outputs to the total operating time calculating unit 116 and the delivery plan generating unit 123, data indicating the estimated frequency "365 (day/time)" of maintaining the manufacturing machine of slightly acidic hypochlorous acid water, which is specified in this manner.

Then, upon receiving from the required condition data entry unit 113, data indicating the maximum value "10 (h) " of the operating time per day of the manufacturing machine of slightly acidic hypochlorous acid water which is required by the client, and receiving from the maintenance frequency specifying unit 115, data indicating the estimated frequency "365 (day/ time) " of maintaining the manufacturing machine of slightly acidic hypochlorous acid water, the total operating time calculating unit 116 calculates the total operating time that can be estimated as a time for which the manufacturing machine of slightly acidic hypochlorous acid water is operated, in a period from the time when the manufacturing machine of slightly acidic hypochlorous acid water is maintained by the maintenance agency to the time when the manufacturing machine of slightly acidic hypochlorous acid water is maintained the next time (S104) . For example, the total operating time calculating unit 116 calculates the total operating time as in the following Formula (3) .

[Formula 3]

$$\text{Total operating time (h)=Maximum value of operating time per day (h)}\times\text{Estimated frequency of maintenance (day/time)} \qquad (3)$$

In this example, the total operating time is 10 (h)×365 (day/time)=3650 (h). Then, the total operating time calculating unit 116 outputs to the lifetime evaluation unit 117, data indicating the total operating time "3650 (h)" calculated in this manner.

Upon receiving from the total operating time calculating unit 116, data indicating the total operating time "3650 (h)", the lifetime evaluation unit 117 determines, based on the information stored by the electrode plate information data storage unit 111, whether or not the lifetime of the electrode plate is longer than the total operating time "3650 (h)", for each electrode plate of multiple types selectable as electrodes of the manufacturing machine of slightly acidic hypochlorous acid water (S 105). For example, in a case where the electrode plate information data storage unit 111 stores the information as shown in FIG. 3, the lifetime evaluation unit 117 determines whether or not a value of the lifetime stored in each record is longer than the total operating time "3650 (h)". In this example, the values of lifetime in the records of the electrode plate IDs "a101", "a102", "a103", "a201", "a202", "a203", "c101", "c102", and "c103" are longer than the total operating time "3650 (h)". Accordingly, the lifetime evaluation unit 117 determines that the lifetimes of the electrode plates identified by those electrode plate IDs are longer than the total operating time "3650 (h)". Then, the lifetime evaluation unit 117 outputs to the generated amount calculating unit 118, data indicating the electrode IDs "a101", "a102", "a103", "a201", "a202", "a203", "c101", "c102", and "c103".

Then, upon receiving from the required condition data entry unit 113, data indicating the maximum value "10 (h) " of the operating time per day of the manufacturing machine of slightly acidic hypochlorous acid water which is required by the client, receiving from the total operating time calculating unit 116, data indicating the total operating time "3650 (h) , and receiving from the lifetime evaluation unit 117, data indicating the electrode IDs "a101", "a102", "a103", "a201", "a202", "a203", "c101", "c102", and "c103", the generated amount calculating unit 118 calculates the estimated amount of chlorine to be generated per day in one electrolytic cell using two electrode plates, only for the electrode plates identified by the electrode IDs "a101", "a102", "a103", "a201", "a202", "a203", "c101", "c102", and "e103", based on the maximum value "10 (h) " of the operating time per day of the manufacturing machine of slightly acidic hypochlorous acid water which is required by the client, the electrochemical equivalent of chlorine "35.5", the total operating time "3650 (h) , and the information stored by the electrode plate information data storage unit 111 (S106) . For example, the generated amount calculating unit 118 calculates the estimated amount of chlorine to be generated per day, as in the following Formula (4) .

[Formula 4]

$$\text{Estimated amount of chlorine to be generated per day in one electrolytic cell using two electrode plates (g)} = \text{Optimal current density (A/dm}^2) \times \text{Area (dm}^2) \times (\text{Current efficiency (\%)}/100) \times \text{Maximum value of operating time per day (h)} \times 60\ \text{(min)} \times 60\ \text{(s)} \times (36.5\ \text{(electrochemical equivalent of available chlorine)}/96500\ \text{(Faraday constant)}) \times (\text{Lifetime (h)}/\text{Total operating time (h)}) \quad (4)$$

In this example, the estimated amount of chlorine to be generated per day in one electrolytic cell using two electrode plates identified by the electrode plate ID "a101" is 4 (A/$dm^2$) ×0.25 ($dm^2$) × (90/100) ×10×60×60× (35.5/96500) × (4000 (h) ) / 3650 (h) ) ≈13 (g) . Similarly, the estimated amount of chlorine to be generated per day in one electrolytic cell using two electrode plates identified by the electrode plate ID "a102" is 52 (g) . Similarly, the estimated amount of chlorine to be generated per day in one electrolytic cell using two electrode plates identified by the electrode plate ID "a103" is 208 (g) . Similarly, the estimated amount of chlorine to be generated per day in one electrolytic cell using two electrode plates identified by the electrode plate ID "a201" is 16 (g) . Similarly, the estimated amount of chlorine to be generated per day in one electrolytic cell using two electrode plates identified by the electrode plate ID "a202" is 65 (g) . Similarly, the estimated amount of chlorine to be generated per day in one electrolytic cell using two electrode plates identified by the electrode plate ID "a203" is 261 (g) . Similarly, the estimated amount of chlorine to be generated per day in one electrolytic cell using two electrode plates identified by the electrode plate ID "c101" is 24 (g) . Similarly, the estimated amount of chlorine to be generated per day in one electrolytic cell using two electrode plates identified by the electrode plate ID "c102" is 98 (g) . Similarly, the estimated amount of chlorine to be generated per day in one electrolytic cell using two electrode plates identified by the electrode plate ID "c103" is 394 (g) . Then, the generated amount calculating unit 118 outputs to the calculating unit of the number of electrode plates 119, data indicating the amounts of chlorine calculated for the respective electrode plates "a101: 13 (g) ", "a102: 52 (g) ", "a103: 208 (g) ", "a201: 16 (g) ", "a202: 65 (g) ", "a203: 261 (g) ", "c101: 24 (g) ", "c102: 98 (g) ", and "c103: 394 (g) ".

Then, upon receiving from the required amount calculating unit 114, data indicating the estimated amount "140 (g) " of chlorine to be required per day, and receiving from the generated amount calculating unit 118, data indicating the amounts of chlorine calculated for the respective electrode plates "a101: 13 (g) ", "a102: 52 (g) ", "a103: 208 (g) ", "a201: 16 (g) ", "a202: 65 (g) ", "a203: 261 (g) ", "c101: 24 (g) ", "c102: 98 (g) ", and "c103: 394 (g) ", the calculating unit of the number of electrode plates 119 calculates the number of electrode plates required to generate per day the estimated amount of chlorine to be required per day "140 (g) ", for each of the electrode plates identified by the electrode IDs "a101", "a102", "a103", "a201", "a202", "a203", "c101", "c102", and "c103", based on the estimated amount of chlorine to be required per day "140 (g) " and the amounts of chlorine calculated for the respective electrode plates "a101: 13 (g) ", "a102: 52 (g) ", "a103: 208 (g) ", "a201: 16 (g) ", "a202: 65 (g) ", "a203: 261 (g) ", "c101: 24 (g) ", "c102: 98 (g) ", and "c103: 394 (g) " (S107) . For example, the calculating unit of the number of electrode plates 119 calculates the number of required electrode plates as in the following Formula (5) .

[Formula 5]

$$\text{Number of required cells (cell)} = (\text{Estimated amount of available chlorine to be required per day (g)}/\text{Estimated amount of available chlorine to be generated per day (g)})\ \text{where a quotient is rounded up.} \quad (5)$$

Number of required electrode plates (plate) =Number of required cells+1

In this example, the number of cells required in the case of using the electrode plate identified by the electrode ID "a101 "is (140 (g)/13 (g))=10.7, which is rounded up to 11 (cell). Accordingly, the number of electrode plates required in the case of using the electrode plate identified by the electrode ID "a101" is 11+1=12 (plate). Similarly, the number of electrode plates required in the case of using the electrode plate identified by the electrode ID "a102" is 4 (plate).

Similarly, the number of electrode plates required in the case of using the electrode plate identified by the electrode ID "a103" is 2 (plate). Similarly, the number of electrode plates required in the case of using the electrode plate identified by the electrode ID "a201" is 10 (plate). Similarly, the number of electrode plates required in the case of using the electrode plate identified by the electrode ID "a202" is 4 (plate). Similarly, the number of electrode plates required in the case of using the electrode plate identified by the electrode ID "a203" is 2 (plate). Similarly, the number of electrode plates required in the case of using the electrode plate identified by the electrode ID "c101" is 7 (plate). Similarly, the number of electrode plates required in the case of using the electrode plate identified by the electrode ID "a102" is 3 (plate). Similarly, the number of electrode plates required in the case of using the electrode plate identified by the electrode ID "c103" is 2 (plate). Then, the calculating unit of the number of electrode plates 119 outputs to the price calculating unit 120, the dimensions calculating unit 121, and the delivery plan generating unit 123, data indicating the numbers of electrode plates calculated for the respective electrode plates, which are "a101: 12 (plate)", "a102: 4 (plate)", "a103: 2 (plate)", "a201: 10 (plate)", "a202: 4 (plate)", "a203: 2 (plate)", "c101: 7 (plate)", "c102: 3 (plate)", and "c103: 2 (plate)".

Then, upon receiving from the calculating unit of the number of electrode plates 119, the data indicating the numbers of electrode plates calculated for the respective electrode plates, which are "a101: 12 (plate) ", "a102: 4 (plate) ", "a103: 2 (plate) ", "a201: 10 (plate) ", "a202: 4 (plate) ", "a203: 2 (plate) ", "c101: 7 (plate) ", "c102: 3 (plate) ", and "c103: 2 (plate) ", the price calculating unit 120 calculates the price of each electrolytic cell to be constituted by the electrode plate, based on the numbers of electrode plates calculated for the respective electrode plates, which are "a101: 12 (plate) ", "a102: 4 (plate) ", "a103: 2 (plate) ", "a201: 10 (plate) ", "a202: 4 (plate) ", "a203: 2 (plate) ", "c101: 7 (plate) ", "c102: 3 (plate) ", and "c103: 2 (plate) ", and the information stored by the electrode plate information data storage unit 111 (S108) . For example, the price calculating unit 120 calculates the price of the electrolytic cell as in the following Formula (6) .

[Formula 6]

$$\text{Price of electrolytic cell (yen)} = \text{Unit price of electrode plate with electrode bar (yen)} \times 2\ \text{(plate)} + \text{Unit price of intermediate electrode plate (yen)} \times (\text{Number of required electrode plates (plate)} - 2\ \text{(plate)}) \quad (6)$$

In this example, the price of the electrolytic cell constituted by the electrode plate identified by the electrode plate ID "a101" is 30000 (yen)×2 (plate)+17500 (yen)×10 (plate)=235000 (yen). Similarly, the price of the electrolytic cell constituted by the electrode plate identified by the electrode plate ID "a102" is 480000 (yen). Similarly, the price of the electrolytic cell constituted by the electrode plate identified by the electrode plate ID "a103" is 1700000 (yen). Similarly, the price of the electrolytic cell constituted by the electrode plate identified by the electrode plate ID "a201" is 330000 (yen). Similarly, the price of the electrolytic cell constituted by the electrode plate identified by the electrode plate ID "a202" is 790000 (yen). Similarly, the price of the electrolytic cell constituted by the electrode plate identified by the electrode plate ID "a203" is 2300000 (yen). Similarly, the price of the electrolytic cell constituted by the electrode plate identified by the electrode plate ID "c101" is 375000 (yen). Similarly, the price of the electrolytic cell constituted by the electrode plate identified by the electrode plate ID "c102" is 1030000 (yen). Similarly, the price of the electrolytic cell constituted by the electrode plate identified by the electrode plate ID "c103" is 3200000 (yen). Then, the price calculating unit 120 outputs to the specification selecting unit 122 and the delivery plan generating unit 123, data indicating the prices of the respective electrolytic cells constituted in this manner, which are "a101: 235000 (yen)", "a102: 480000 (yen)", "a103: 1700000 (yen)", "a201: 330000 (yen)", "a202: 790000 (yen)", "a203: 2300000 (yen)", "c101: 3200000 (yen)", "c102: 1030000 (yen)", and "c103: 3200000 (yen)".

On the other hand, upon receiving from the calculating unit of the number of electrode plates 119, data indicating the numbers of electrode plates calculated for the respective electrode plates, which are "a101: 12 (plate)", "a102: 4 (plate)", "a103: 2 (plate)", "a201: 10 (plate)", "a202: 4 (plate)", "a203: 2 (plate)", "c101: 7 (plate)", "c102: 3 (plate)", and "c103: 2 (plate)", the dimensions calculating unit 121 calculates the dimensions of each electrolytic cell to be constituted by the electrode plate, based on the numbers of electrode plates calculated for the respective electrode plates, which are "a101: 12 (plate)", "a102: 4 (plate)", "a103: 2 (plate)", "a201: 10 (plate)", "a202: 4 (plate)", "a203: 2 (plate)", "c101: 7 (plate)", "c102: 3 (plate)", and "c103: 2 (plate)", and the information stored by the electrode plate information data storage unit 111 (S109). For example, the dimensions calculating unit 121 calculates the dimension of the electrolytic cell as in the following Formula (7).

[Formula 7]

Dimension of electrolytic cell (height (mm)×depth (mm)×width (mm))

Height, Depth= $\sqrt{Area} \times 100$

Width=2 (number of electrode plates with electrode bars)×1 (width of electrode plates with electrode bars)+ (Number of electrode plates−2) (number of intermediate electrode plates)×0.5 (width of intermediate electrode plate)+ (Number of electrode plates−1) (number of cells)×3 (width of cell) (7)

In this example, the dimensions of the electrolytic cell constituted by the electrode plate identified by the electrode plate ID "a101" are the height=0.5×100=50 (mm) , the depth=50 (mm) , and the width=2×1+ (12- 2) ×0.5+ (12- 1) ×3=40 (mm) . Similarly, the dimensions of the electrolytic cell constituted by the electrode plate identified by the electrode plate ID "a102" are the height=100 (mm) , the depth=100 (mm) , and the width=12 (mm) . Similarly, the dimensions of the electrolytic cell constituted by the electrode plate identified by the electrode plate ID "a103" are the height=200 (mm) , the depth=200 (mm) , and the width=5 (mm) . Similarly, the dimensions of the electrolytic cell constituted by the electrode plate identified by the electrode plate ID "a201" are the height=50 (mm) , the depth=50 (mm) , and the width=33 (mm) . Similarly, the dimensions of the electrolytic cell constituted by the electrode plate identified by the electrode plate ID "a202" are the height=100 (mm) , the depth=100 (mm) , and the width=12 (mm) . Similarly, the dimensions of the electrolytic cell constituted by the electrode plate identified by the electrode plate ID "a203" are the height=200 (mm) , the depth=200 (mm) , and the width=5 (mm) . Similarly, the dimensions of the electrolytic cell constituted by the electrode plate identified by the electrode plate ID "c101" are the height=50 (mm) , the depth=50 (mm) , and the width=22.5 (mm) . Similarly, the dimensions of the electrolytic cell constituted by the electrode plate identified by the electrode plate ID "c102" are the height=100 (mm) , the depth=100 (mm) , and the width=8.5 (mm) . Similarly, the dimensions of the electrolytic cell constituted by the electrode plate identified by the electrode plate ID "c103" are the height=200 (mm) , the depth=200 (mm) , and the width=5 (mm) . Then, the price calculating unit 120 outputs to the specification selecting unit 122 and the delivery plan generating unit 123, data indicating the dimensions of the respective electrolytic cells constituted in this manner, which are "a101: 50 (mm) ×50 (mm) x40 (mm) ", "a102: 100 (mm) ×100 (mm) ×12 (mm) ", "a103: 200 (mm) ×200 (mm) ×5 (mm) ", "a201: 50 (mm) x50 (mm) ×33 (mm) ", "a202: 100 (mm) ×100 (mm) ×12 (mm) ", "a203: 200 (mm) ×200 (mm) ×5 (mm) ", "c101: 50 (mm) ×50 (mm) ×22.5 (mm) ", "c102: 100 (mm) ×100 (mm) ×8.5 (mm) ", and "c103: 200 (mm) ×200 (mm) ×5 (mm) ".

Then, in this example, the specification selecting unit 122 receives from the required condition data entry unit 113, data indicating the condition of "price" as the condition for the manufacturing machine of slightly acidic hypochlorous acid water which is emphasized by the client, and the number of delivery plans "1" of the manufacturing machine of slightly acidic hypochlorous acid water which is desired by the client. Accordingly, upon receiving from the price calculating unit 120, data indicating the prices of the respective electrolytic cells, which are "a101: 235000 (yen)", "a102: 480000 (yen)", "a103: 1700000 (yen)", "a201: 330000 (yen)", "a202: 790000 (yen)", "a203: 2300000 (yen)", "c101: 3200000 (yen)", "c102: 1030000 (yen)", and "c103: 3200000 (yen)", the specification selecting unit 122 selects one specification of an electrolytic cell which is cheaper in price, based on the prices of the respective electrolytic cells, which are "a101: 235000 (yen)", "a102: 480000 (yen)", "a103: 1700000 (yen)", "a201: 330000 (yen)", "a202: 790000 (yen)", "a203: 2300000 (yen)", "c101: 3200000 (yen)", "c102: 1030000 (yen)", and "c103: 3200000 (yen)" (S110). In this example, the specification selecting unit 122 selects the specification of the electrolytic cell using the electrode plate identified by the electrode plate ID "a101", as the specification of the cheapest electrolytic cell. Then, the specification selecting unit 122 outputs to the delivery plan generating unit 123, data indicating that the specification of the electrolytic cell using the electrode plate identified by the electrode plate ID "a101" is selected.

Thus, the delivery plan generating unit 123 receives from the maintenance frequency specifying unit 115, the data indicating the estimated frequency "365 (day/ time) " of maintaining the manufacturing machine of slightly acidic hypochlorous acid water. Additionally, the delivery plan generating unit 123 receives from the calculating unit of the number of electrode plates 119, the data indicating the numbers of electrode plates calculated for the respective electrode plates, which are "a101: 12 (plate) ", "a102: 4 (plate) ", "a103: 2 (plate) ", "a201: 10 (plate) ", "a202: 4 (plate) ", "a203: 2 (plate) ", "c101: 7 (plate) ", "c102: 3 (plate) ", and "c103: 2 (plate) ". Further, the delivery plan generating unit 123 receives from the price calculating unit 120, the data indicating the prices of the respective configurable electrolytic cells, which are "a101: 235000 (yen) ", "a102: 480000 (yen) ", "a103: 1700000 (yen) ", "a201: 330000 (yen) ", "a202: 790000 (yen) ", "a203: 2300000 (yen) ", "c101: 3200000 (yen) ", "c102: 1030000 (yen) ", and "c103: 3200000 (yen) ". Moreover, the delivery plan generating unit 123 receives from the dimensions calculating unit 121, the data indicating the dimensions of the respective electrolytic cells constituted in this manner, which are "a101: 50 (mm) ×50 (mm) ×40 (mm) ", "a102: 100 (mm) ×100 (mm) ×12 (mm) ", "a103: 200 (mm) ×200 (mm) x5 (mm) ", "a201: 50 (mm) ×50 (mm) x33 (mm) ", "a202: 100 (mm) ×100 (mm) ×12 (mm) ", "a203: 200 (mm) ×200 (mm) ×5 (mm) ", "c101: 50 (mm) ×50 (mm) ×22.5 (mm) ", "c102: 100 (mm) ×100 (mm) x8.5 (mm) ", and "c103: 200 (mm) x200 (mm) ×5 (mm) ". Additionally, the delivery plan generating unit 123 receives from the specification selecting unit 122, the data indicating that the specification of the electrode plate identified by the electrode plate ID "a101" is selected. Accordingly, the delivery plan generating unit 123 generates a web page as shown in FIG. 6 that shows a delivery plan that presents to the client: the information "150 (mm) ×150 (mm) ×120 (mm) " that is the dimensions (heightxdepthxwidth) of the manufacturing machine of slightly acidic hypochlorous acid water determined by an arbitrary formula based on the information "12 (plate) " that is the number of electrode plates of the electrolytic cell with the specification using the electrode plate identified by the electrode plate ID "a101", and the dimensions (height×depth×width) "50 (mm) ×50 (mm) ×40 (mm) " of the electrolytic cell with the specification using the electrode plate identified by the electrode plate ID "a101"; the information "800000 (yen) " that indicates the price of the manufacturing machine of slightly acidic hypochlorous acid water including the electrolytic cell, which is determined by an arbitrary formula based on the price "235000 (yen) " of the electrolytic cell with the specification using the electrode plate identified by the electrode plate ID "a101"; and the information "365 (day/ time) " that is the estimated frequency of maintaining the manufacturing machine of slightly acidic hypochlorous acid water (S111) . Then, the delivery plan generating unit 123 outputs to the delivery plan data output unit 124, the web page showing the delivery plan generated in this manner.

Then, upon receiving from the required condition data entry unit 113, data indicating the IP address of the client 140, and receiving from the delivery plan generating unit 123, the web page showing the delivery plan, the delivery plan data output unit 124 outputs to the IP address of the client 140, the web page showing the delivery plan.

As explained above, according to the delivery plan presenting system 100, when a client buys a manufacturing machine of slightly acidic hypochlorous acid water, the client transmits data indicating required conditions, to the web server 110 using the client 140. Thus, the client can obtain a delivery plan presenting the specification of the manufacturing machine of slightly acidic hypochlorous acid water including the electrolytic cell having the configuration suitable to those conditions.

Additionally, according to the delivery plan presenting system 100, when the client buys the manufacturing machine of slightly acidic hypochlorous acid water, if the client further requires the maximum value of the amount of slightly acidic hypochlorous acid water manufactured per hour, the client transmits data indicating that additional requirement, to the web server 110 using the client 140. Thus, the client can obtain the delivery plan presenting the specification of the manufacturing machine of slightly acidic hypochlorous acid water including the electrolytic cell having the configuration suitable to those conditions.

Further, according to the delivery plan presenting system 100, when the client buys the manufacturing machine of slightly acidic hypochlorous acid water, if the client wants to receive periodical maintenance service for the manufacturing machine of slightly acidic hypochlorous acid water, the client transmits to the web server 110 using the client 140, data indicating the address at which the manufacturing machine of slightly acidic hypochlorous acid water is to be installed. Thus, the client can obtain the delivery plan presenting the specification of the manufacturing machine of slightly acidic hypochlorous acid water including the electrolytic cell having the configuration suitable to receiving the periodical maintenance service.

Moreover, according to the delivery plan presenting system 100, when the client buys the manufacturing machine of slightly acidic hypochlorous acid water, if the client further requires that the price of the manufacturing machine of slightly acidic hypochlorous acid water be cheaper, the client transmits to the web server 110 using the client 140, data indicating that requirement. Thus, the client can obtain the delivery plan presenting the specification of the manufacturing machine of slightly acidic hypochlorous acid water including the electrolytic cell having the configuration suitable to that condition.

Additionally, according to the delivery plan presenting system 100, when the client buys the manufacturing machine of slightly acidic hypochlorous acid water, if the client further requires that the dimensions of the manufacturing machine of slightly acidic hypochlorous acid water be smaller, the client transmits to the web server 110 using the client 140, data indicating that requirement. Thus, the client can obtain the delivery plan presenting the specification of the manufacturing machine of slightly acidic hypochlorous acid water including the electrolytic cell having the configuration suitable to that condition.

Further, according to the delivery plan presenting system 100, when the client buys the manufacturing machine of slightly acidic hypochlorous acid water, if the client further requires that the lifetime of the manufacturing machine of slightly acidic hypochlorous acid water be longer, the client transmits to the web server 110 using the client 140, data indicating that requirement. Thus, the client can obtain the delivery plan presenting the specification of the manufacturing machine of slightly acidic hypochlorous acid water including the electrolytic cell having the configuration suitable to that condition.

Moreover, according to the delivery plan presenting system 100, when the client buys the manufacturing machine of slightly acidic hypochlorous acid water, the client transmits data indicating the required condition to the web server 110 using the client 140. Thus, the client can obtain the delivery plan presenting the price of the manufacturing machine of slightly acidic hypochlorous acid water including the electrolytic cell having the configuration suitable to that condition.

Additionally, according to the delivery plan presenting system 100, when the client buys the manufacturing machine of slightly acidic hypochlorous acid water, the client transmits data indicating the required condition to the web server 110 using the client 140. Thus, the client can obtain the delivery plan presenting the price of the manufacturing machine of slightly acidic hypochlorous acid water including the electrolytic cell having the configuration suitable to that condition.

Further, according to the delivery plan presenting system 100, when the client buys the manufacturing machine of slightly acidic hypochlorous acid water, the client transmits data indicating the required condition to the web server 110 using the client 140. Thus, the client can obtain the delivery plan presenting the estimated frequency of maintenance of the manufacturing machine of slightly acidic hypochlorous acid water including the electrolytic cell having the configuration suitable to that condition.

The delivery plan presenting system 100 can be effectively utilized in various business fields. For example, regarding ships, there are various classes, such as large and small ships, and various processing amounts of ballast water. Regarding newly built ships, it is possible to provide, from a design process, a large manufacturing machine of slightly acidic hypochlorous acid water, as a manufacturing machine of slightly acidic hypochlorous acid water for sterilizing ballast water. Regarding existing ships, however, it is difficult to provide a large manufacturing machine of slightly acidic hypochlorous acid water. For this reason, in such as case, the delivery plan presenting system 100, which can design a manufacturing machine of slightly acidic hypochlorous acid water suitable to an installation space, is effective means.

Additionally, it is provided by the Water Supply Act in Japan that chlorine be used to sterilize clean water. Recently, there is a case where some municipality emphasizes the number of bacteria in sewage water. To sterilize clean water and sewage water, it is desirable to introduce a manufacturing machine of slightly acidic hypochlorous acid water, but there are various processing capabilities required by each municipality. For this reason, in such a case, the delivery plan presenting system 100, which can design a manufacturing machine of slightly acidic hypochlorous acid water suitable to a required capability, is effective means.

Further, in plant factories, the amount of slightly acidic hypochlorous acid water to be used varies depending on crops to be cultivated. For this reason, in such a case, the delivery plan presenting system 100, which can design, for each crop to be cultivated, a manufacturing machine of slightly acidic hypochlorous acid water suitable to a required capability, is effective means.

FIG. 8 illustrates an example of a hardware configuration in a case where the web server 110 is constituted by an electronic information processing device, such as a computer. The web server 110 includes: a CPU (central processing unit) peripheral unit; an input output unit; and a legacy input output unit. The CPU peripheral unit includes: a CPU 902; a RAM (random access memory) 903; a graphic controller 904; and a display device 905, which are mutually connected by a host controller 901. The input output unit includes: a communication interface 907; a hard disk drive 908; and a CD-ROM (compact disc read only memory) drive 909, which are connected to the host controller 901 via an input output controller 906. The legacy input output unit includes: a ROM (read only memory) 910; a flexible disk drive 911; and an input output chip 912, which are connected to the input output controller 906.

The host controller 901 connects the RAM 903, the CPU 902 that accesses the RAM 903 at a high transfer rate, and the graphic controller 904. The CPU 902 operates based on programs stored in the ROM 910 and the RAM 903, and controls each unit. The graphic controller 904 obtains image data that the CPU 902 or the like generates in a frame buffer included in the RAM 903, and displays the obtained image data on the display device 905. Alternatively, the graphic controller 904 may include a frame buffer that stores image data generated by the CPU 902 or the like.

The input output controller 906 connects the host controller 901, the hard disk drive 908 that is a relatively high-speed input output device, the communication interface 907, and the CD-ROM drive 909. The hard disk drive 908 stores programs and data to be used by the CPU 902. The communication interface 907 accesses a network communication device 991 and transmits and receives a program or data. The CD-ROM drive 909 reads a program or data from the CD-ROM 992, and outputs the program or data to the hard disk drive 908 and the communication interface 907 via the RAM 903.

Relatively low-speed input output devices, such as the ROM 910, the flexible disk drive 911, and the input output chip 912 are connected to the input output controller 906. The ROM 910 stores a boot program to be executed when the web server 110 is activated, a program depending on hardware of the web server 110, and the like. The flexible disk drive 911 reads the program or data from the flexible disk 993, and outputs the program or data to the hard disk drive 908 and the communication interface 907 via the RAM 903. The input output chip 912 connects various input output devices via the flexible disk drive 911, a parallel port, a serial port, a keyboard port, a mouse port, or the like.

The program to be executed by the CPU 902 is stored in a recording medium, such as the flexible disk 993, the CD-ROM 992, or an IC (integrated circuit) card, and is provided by a user. The program stored in the recording medium may be compressed or uncompressed. The program is installed from the recording medium to the hard disk drive 908, is read by the RAM 903, and is executed by the CPU 902. The program to be executed by the CPU 902 causes the web server 110 to function as: the electrode plate information data storage unit 111; the maintenance contractors information data storage unit 112; the required condition data entry unit 113; the required amount calculating unit 114; the maintenance frequency specifying unit 115; the total operating time calculating unit 116; the lifetime evaluation unit 117; the generated amount calculating unit 118; the calculating unit of the number of electrode plates 119; the price calculating unit 120; the dimensions calculating unit 121; the specification selecting unit 122; the delivery plan generating unit 123; and the delivery plan data output unit 124, which have been explained with reference to FIGS. 1 to 7.

The above program may be stored in an external recording medium. Other than the flexible disk 993 and the CD-ROM 992, an optical recording medium such as a DVD (digital versatile disc) or a PD (phase disk), a magnet-optical recording medium such as MD (mini disc), a semiconductor memory such as a tape medium or an IC card, may be used as the recording medium. Additionally, a recording medium, such as a hard disk or a RAM provided in a server system connected to a dedicated communication network or the Internet, may be used as the recording medium, thereby providing the delivery plan presenting system 100 as a program via the network.

Although the embodiments of the present invention have been explained above, the technical scope of the present invention is not limited to the above embodiments. Those skilled in the art will recognize that various modifications and improvements may be added to the above embodiments. It can be understood from the descriptions of "CLAIMS" that embodiments resulting from those modifications and improvements are also within in the technical scope of the present invention.

## INDUSTRIAL APPLICABILITY

The present invention is applicable to, for example, a system, a device, and a method for marketing a manufacturing machine of electrolysis water by the pattern order method.

## DESCRIPTION OF REFERENCE NUMERALS

100: delivery plan presenting system
110: web server
111: electrode plate information data storage unit
112: maintenance contractors information data storage unit
113: required condition data entry unit
114: required amount calculating unit
115: maintenance frequency specifying unit
116: total operating time calculating unit
117: lifetime evaluation unit
118: generated amount calculating unit
119: calculating unit of number of electrode plates
120: price calculation calculating unit
121: dimensions calculating unit
122: specification selecting unit
123: delivery plan generating unit
124: delivery plan data output unit
140: client
150: communication line
180: web page
181: text box
182: text box
183: text box
184: text box
185: list box
186: radio button

187: list box
188: list box
189: button
190: web page
901: host controller
902: CPU
903: RAM
904: graphic controller
905: display device
906: input output controller
907: communication interface
908: hard disk drive
909: CD-ROM drive
910: ROM
911: flexible disk drive
912: input output chip
991: network communication device
992: CD-ROM
993: flexible disk

**Claims**

1. A delivery plan presenting system that presents a delivery plan of a manufacturing machine of electrolysis water to be delivered to a client, the delivery plan presenting system comprising:

   a required amount calculating unit configured to calculate, based on a concentration of an active element in electrolysis water which is required by the client, and a maximum value of an amount of electrolysis water manufactured per unit duration which is required by the client, an amount of the active element to be required per the unit duration;
   a generated amount calculating unit configured to calculate, based on a specification of an electrode plate to be selected as an electrode of the electrolytic cell, a maximum value of an operating time per unit duration of the manufacturing machine which is required by the client, and an electrochemical equivalent of the active element, an amount of the active element to be generated per the unit duration in one electrolytic cell using the two electrode plates;
   a calculating unit of the number of electrode plates configured to calculate, based on the amount of the active element calculated by the required amount calculating unit and the amount of the active element calculated for each of the electrode plates by the generated amount calculating unit, the number of electrode plates required to generate per the unit duration the amount of the active element calculated by the required amount calculating unit;
   a specification selecting unit configured to select at least one specification of the electrolytic cell from among specifications of electrolytic cells to be constituted by the electrode plates, based on a condition for the manufacturing machine which is emphasized by the client;
   a delivery plan generating unit configured to generate a delivery plan that presents the specification of the electrolytic cell which is selected by the specification selecting unit and which includes information concerning the number of electrode plates of the electrolytic cell, or a specification of the manufacturing machine including the electrolytic cell; and
   a delivery plan data output unit configured to output data indicating the delivery plan generated by the delivery plan generating unit.

2. The delivery plan presenting system according to claim 1, wherein the required amount calculating unit is configured to, when the client requires a maximum value of an amount of electrolysis water manufactured per unit time that is shorter than the unit duration, calculate a maximum value of an amount of electrolysis water manufactured per the unit duration, based on the maximum value of the amount of electrolysis water manufactured per the unit time and the maximum value of the operating time per the unit duration of the manufacturing machine, and calculate the amount of the active element to be required per the unit duration, based on the calculated amount of the maximum value of the amount of electrolysis water manufactured per the unit duration and the concentration of the active element in electrolysis water which is required by the client.

3. The delivery plan presenting system according to claim 1 or 2, wherein the required amount calculating unit is configured to, when the client requires that a plurality of electrolytic cells be used, divides the maximum value of the amount of electrolysis water manufactured per the unit duration which is required by the client, by the number of electrolytic cells required by the client, to obtain a value as the maximum value of the amount of electrolysis water manufactured per the unit duration which is required by the client, thereby calculating the amount of the active element to be required per the unit duration.

4. The delivery plan presenting system according to any one of claims 1 to 3, further comprising:

a maintenance frequency specifying unit configured to specify, based on information concerning an address at which the manufacturing machine is to be installed, a frequency at which a maintenance agency visits the address and maintains the manufacturing machine;
a total operating time calculating unit configured to calculate, the frequency of maintaining the manufacturing machine which is specified by the maintenance frequency specifying unit, and the maximum value of the operating time per the unit duration of the manufacturing machine, calculate the total operating time to be estimated as an operating time of the manufacturing machine, in a period from the time when the manufacturing machine is maintained to the time when the manufacturing machine is next maintained; and
a lifetime determining unit configured to determine, for each of the electrode plates whether or not a lifetime of the electrode plate is longer than the total operating time calculated by the total operating time calculating unit,
wherein the generated amount calculating unit is configured to calculate the amount of the active element only for the electrode plate having the lifetime determined by the lifetime determining unit to be longer than the total operating time, based further on the lifetime of the electrode plate and the total operating time calculated by the total operating time calculating unit.

5. The delivery plan presenting system according to any one of claims 1 to 4, further comprising:

a price calculating unit configured to calculate a price of each of the electrolytic cells to be constituted by the electrode plates, based on the number of electrode plates calculated by the calculating unit of the number of electrode plates for each of the electrode plates and a unit price of each of the electrode plates,
wherein the specification selecting unit is configured to, when the condition for the manufacturing machine which is emphasized by the client is that a price of the manufacturing machine be cheaper, select at least one specification of the electrode cell that is cheaper, based on the price of each of the electrolytic cells calculated by the price calculating unit.

6. The delivery plan presenting system according to any one of claims 1 to 4, further comprising:

a dimensions calculating unit configured to calculate, based on the number of electrode plates calculated by the calculating unit of the number of electrode plates for each of the electrode plates and dimensions of each of the electrode plates, dimensions of each of electrolytic cells to be constituted by each of the electrode plates,
wherein the specification selecting unit is configured to select at least one specification of the electrolytic cell that is smaller in dimensions, based on the dimensions of each of the electrolytic cells calculated by the dimensions calculating unit.

7. The delivery plan presenting system according to any one of claims 1 to 4, wherein the specification selecting unit is configured to, when the condition for the manufacturing machine which is emphasized by the client is that a lifetime of the manufacturing machine be longer, select at least one specification of the electrolytic cell that is longer in lifetime.

8. The delivery plan presenting system according to any one of claims 1 to 7, wherein the delivery plan generating unit is configured to generate the delivery plan that further presents a price of the manufacturing machine including the electrolytic cell, which is determined based on the price of the electrolytic cell with the specification selected by the specification selecting unit.

9. The delivery plan presenting system according to any one of claims 1 to 8, wherein the delivery plan generating unit is configured to generate the delivery plan that further presents dimensions of the manufacturing machine including the electrolytic cell, which are determined based on the dimensions of the electrolytic cell with the specification selected by the specification selecting unit.

10. The delivery plan presenting system according to any one of claims 1 to 9, wherein the delivery plan generating unit is configured to generate the delivery plan that further presents the frequency of maintaining the manufacturing machine which is specified by the maintenance frequency specifying unit.

**11.** A delivery plan presenting device that presents a delivery plan of a manufacturing machine of electrolysis water to be delivered to a client, the delivery plan presenting device comprising:

a required amount calculating unit configured to calculate, based on a concentration of an active element in electrolysis water which is required by the client, and a maximum value of an amount of electrolysis water manufactured per unit duration which is required by the client, an amount of the active element to be required per the unit duration;
a generated amount calculating unit configured to calculate, based on a specification of an electrode plate to be selected as an electrode of the electrolytic cell, a maximum value of an operating time per unit duration of the manufacturing machine which is required by the client, and an electrochemical equivalent of the active element, an amount of the active element to be generated per the unit duration in one electrolytic cell using the two electrode plates;
a calculating unit of the number of electrode plates configured to calculate, based on the amount of the active element calculated by the required amount calculating unit and the amount of the active element calculated for each of the electrode plates by the generated amount calculating unit, the number of electrode plates required to generate per the unit duration the amount of the active element calculated by the required amount calculating unit;
a specification selecting unit configured to select at least one specification of the electrolytic cell from among specifications of electrolytic cells to be constituted by the electrode plates, based on a condition for the manufacturing machine which is emphasized by the client;
a delivery plan generating unit configured to generate a delivery plan that presents the specification of the electrolytic cell which is selected by the specification selecting unit and which includes information concerning the number of electrode plates of the electrolytic cell, or a specification of the manufacturing machine including the electrolytic cell; and
a delivery plan data output unit configured to output data indicating the delivery plan generated by the delivery plan generating unit.

**12.** A control method for a delivery plan presenting device that presents a delivery plan of a manufacturing machine of electrolysis water to be delivered to a client, the control method comprising:

a required amount calculating step of calculating, based on a concentration of an active element in electrolysis water which is required by the client, and a maximum value of an amount of electrolysis water manufactured per unit duration which is required by the client, an amount of the active element to be required per the unit duration;
a generated amount calculating step of calculating, based on a specification of an electrode plate to be selected as an electrode of the electrolytic cell, a maximum value of an operating time per unit duration of the manufacturing machine which is required by the client, and an electrochemical equivalent of the active element, an amount of the active element to be generated per the unit duration in one electrolytic cell using the two electrode plates;
a number of electrode plates calculating step of calculating, based on the amount of the active element calculated in the required amount calculating step and the amount of the active element calculated for each of the electrode plates in the generated amount calculating step, the number of electrode plates required to generate per the unit duration the amount of the active element calculated in the required amount calculating step;
a specification selecting step of selecting at least one specification of the electrolytic cell from among specifications of electrolytic cells to be constituted by the electrode plates, based on a condition for the manufacturing machine which is emphasized by the client;
a delivery plan generating step of generating a delivery plan that presents the specification of the electrolytic cell which is selected in the specification selecting step and which includes information concerning the number of electrode plates of the electrolytic cell, or a specification of the manufacturing machine including the electrolytic cell; and
a delivery plan data output step of outputting data indicating the delivery plan generated in the delivery plan generating step.

**13.** A program for a delivery plan presenting device that presents a delivery plan of a manufacturing machine of electrolysis water to be delivered to a client, the program causing a computer of the delivery plan presenting device to execute:

a required amount calculating step of calculating, based on a concentration of an active element in electrolysis water which is required by the client, and a maximum value of an amount of electrolysis water manufactured per unit duration which is required by the client, an amount of the active element to be required per the unit duration;
a generated amount calculating step of calculating, based on a specification of an electrode plate to be selected as an electrode of the electrolytic cell, a maximum value of an operating time per unit duration of the manufacturing machine which is required by the client, and an electrochemical equivalent of the active element, an amount of the active element to be generated per the unit duration in one electrolytic cell using the two electrode plates;
a number of electrode plates calculating step of calculating, based on the amount of the active element calculated in the required amount calculating step and the amount of the active element calculated for each of the electrode plates in the generated amount calculating step, the number of electrode plates required to generate per the unit duration the amount of the active element calculated in the required amount calculating step;
a specification selecting step of selecting at least one specification of the electrolytic cell from among specifications of electrolytic cells to be constituted by the electrode plates, based on a condition for the manufacturing machine which is emphasized by the client;
a delivery plan generating step of generating a delivery plan that presents the specification of the electrolytic cell which is selected in the specification selecting step and which includes information concerning the number of electrode plates of the electrolytic cell, or a specification of the manufacturing machine including the electrolytic cell; and
a delivery plan data output step of outputting data indicating the delivery plan generated in the delivery plan generating step.

**14.** A computer-readable recording medium for a delivery plan presenting device that presents a delivery plan of a manufacturing machine of electrolysis water to be delivered to a client, the computer-readable recording medium causing a computer of the delivery plan presenting device to execute:

a required amount calculating step of calculating, based on a concentration of an active element in electrolysis water which is required by the client, and a maximum value of an amount of electrolysis water manufactured per unit duration which is required by the client, an amount of the active element to be required per the unit duration;
a generated amount calculating step of calculating, based on a specification of an electrode plate to be selected as an electrode of the electrolytic cell, a maximum value of an operating time per unit duration of the manufacturing machine which is required by the client, and an electrochemical equivalent of the active element, an amount of the active element to be generated per the unit duration in one electrolytic cell using the two electrode plates;
a number of electrode plates calculating step of calculating, based on the amount of the active element calculated in the required amount calculating step and the amount of the active element calculated for each of the electrode plates in the generated amount calculating step, the number of electrode plates required to generate per the unit duration the amount of the active element calculated in the required amount calculating step;
a specification selecting step of selecting at least one specification of the electrolytic cell from among specifications of electrolytic cells to be constituted by the electrode plates, based on a condition for the manufacturing machine which is emphasized by the client;
a delivery plan generating step of generating a delivery plan that presents the specification of the electrolytic cell which is selected in the specification selecting step and which includes information concerning the number of electrode plates of the electrolytic cell, or a specification of the manufacturing machine including the electrolytic cell; and
a delivery plan data output step of outputting data indicating the delivery plan generated in the delivery plan generating step.

FIG. 1

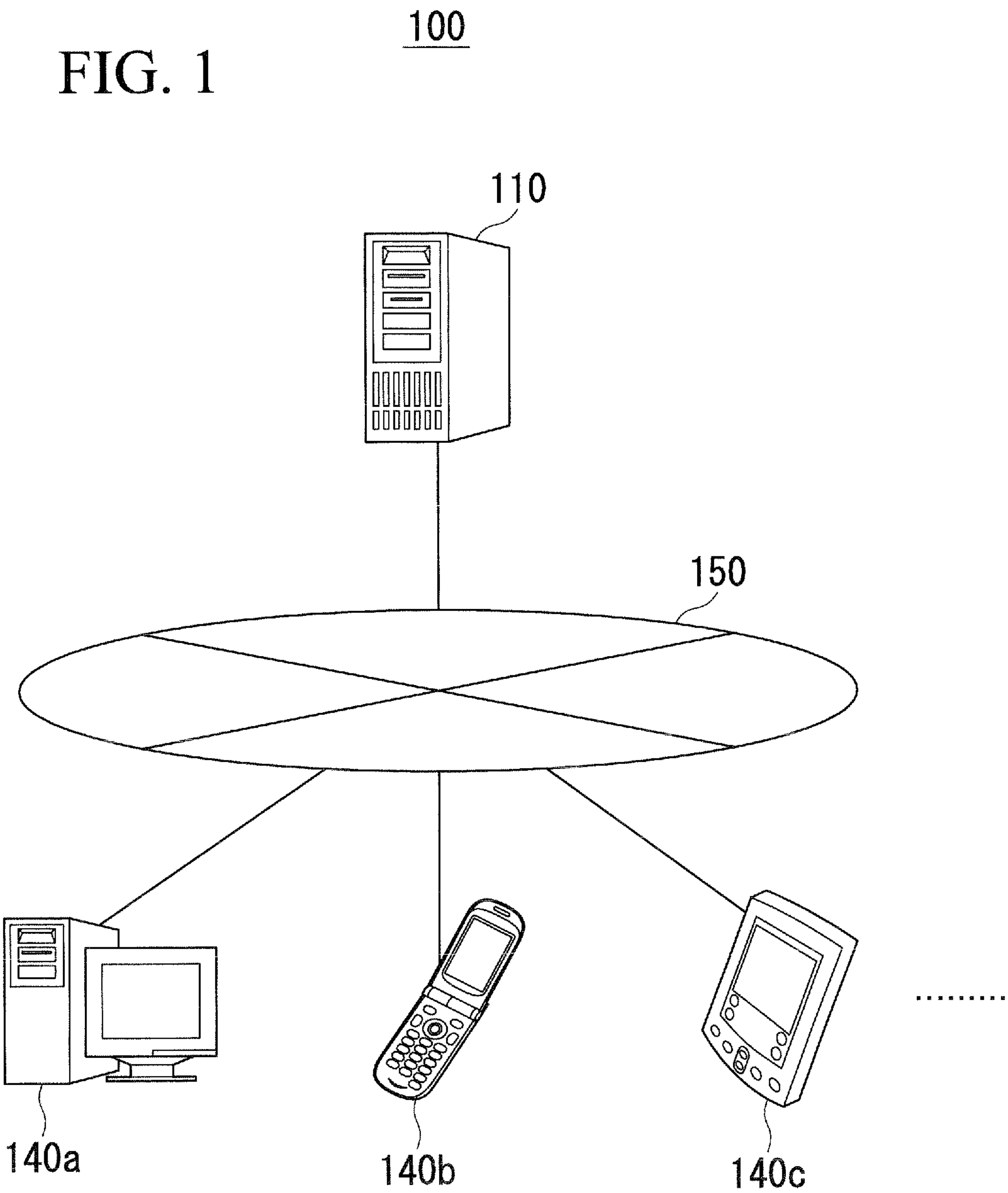

FIG. 2

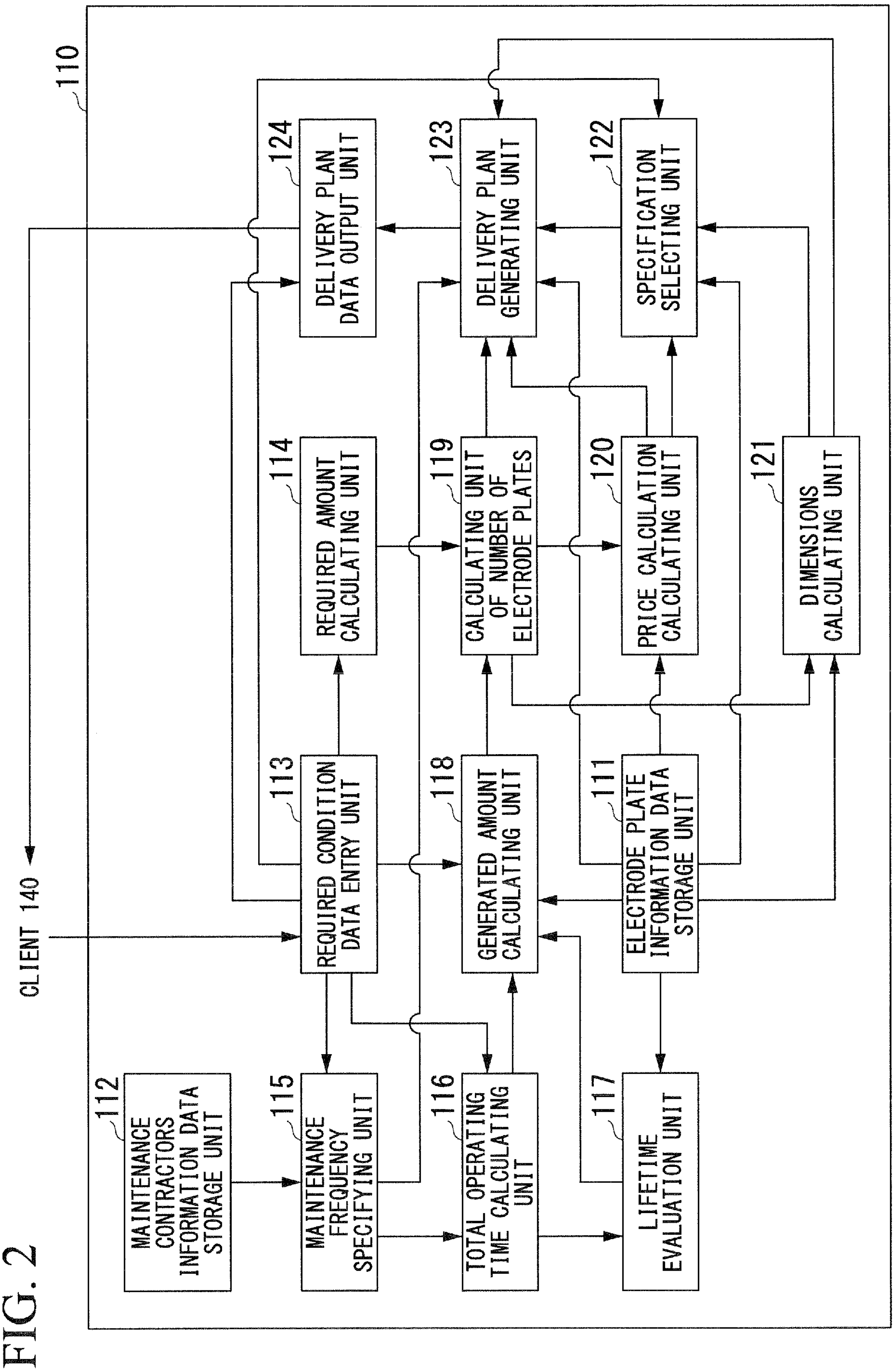
110
CLIENT 140
111 ELECTRODE PLATE INFORMATION DATA STORAGE UNIT
112 MAINTENANCE CONTRACTORS INFORMATION DATA STORAGE UNIT
113 REQUIRED CONDITION DATA ENTRY UNIT
114 REQUIRED AMOUNT CALCULATING UNIT
115 MAINTENANCE FREQUENCY SPECIFYING UNIT
116 TOTAL OPERATING TIME CALCULATING UNIT
117 LIFETIME EVALUATION UNIT
118 GENERATED AMOUNT CALCULATING UNIT
119 CALCULATING UNIT OF NUMBER OF ELECTRODE PLATES
120 PRICE CALCULATION CALCULATING UNIT
121 DIMENSIONS CALCULATING UNIT
122 SPECIFICATION SELECTING UNIT
123 DELIVERY PLAN GENERATING UNIT
124 DELIVERY PLAN DATA OUTPUT UNIT

FIG. 3

111

| ELECTRODE PLATE ID | AREA ($dm^2$) | CURRENT EFFICIENCY (%) | OPTIMAL CURRENT DENSITY ($A/dm^2$) | LIFETIME (h) | UNIT PRICE (YEN) | |
|---|---|---|---|---|---|---|
| | | | | | ELECTRODE BAR | INTERMEDIATE ELECTRODE PLATE |
| a101 | 0.25 | 90 | 4 | 4000 | 30000 | 17500 |
| a102 | 1.00 | 90 | 4 | 4000 | 175000 | 65000 |
| a103 | 4.00 | 90 | 4 | 4000 | 850000 | 250000 |
| a201 | 0.25 | 75 | 6 | 4000 | 45000 | 30000 |
| a202 | 1.00 | 75 | 6 | 4000 | 310000 | 85000 |
| a203 | 4.00 | 75 | 6 | 4000 | 1150000 | 450000 |
| b101 | 0.25 | 80 | 5 | 3000 | 17000 | 13500 |
| b102 | 1.00 | 80 | 5 | 3000 | 65000 | 32000 |
| b103 | 4.00 | 80 | 5 | 3000 | 350000 | 200000 |
| c101 | 0.25 | 85 | 4 | 8000 | 75000 | 45000 |
| c102 | 1.00 | 85 | 4 | 8000 | 400000 | 230000 |
| c103 | 4.00 | 85 | 4 | 8000 | 1600000 | 850000 |

FIG. 4

112

| CONTRACTOR ID | CONTRACTOR NAME | SERVICE AREA | MAINTENANCE FREQUENCY (DAY/TIME) |
|---|---|---|---|
| m001 | D CORPORATION | TOKYO-TO | 365 |
| m001 | D CORPORATION | CHIBA-KEN | 395 |
| m002 | E CORPORATION | SAITAMA-KEN | 365 |
| ⋮ | ⋮ | ⋮ | ⋮ |

FIG. 5

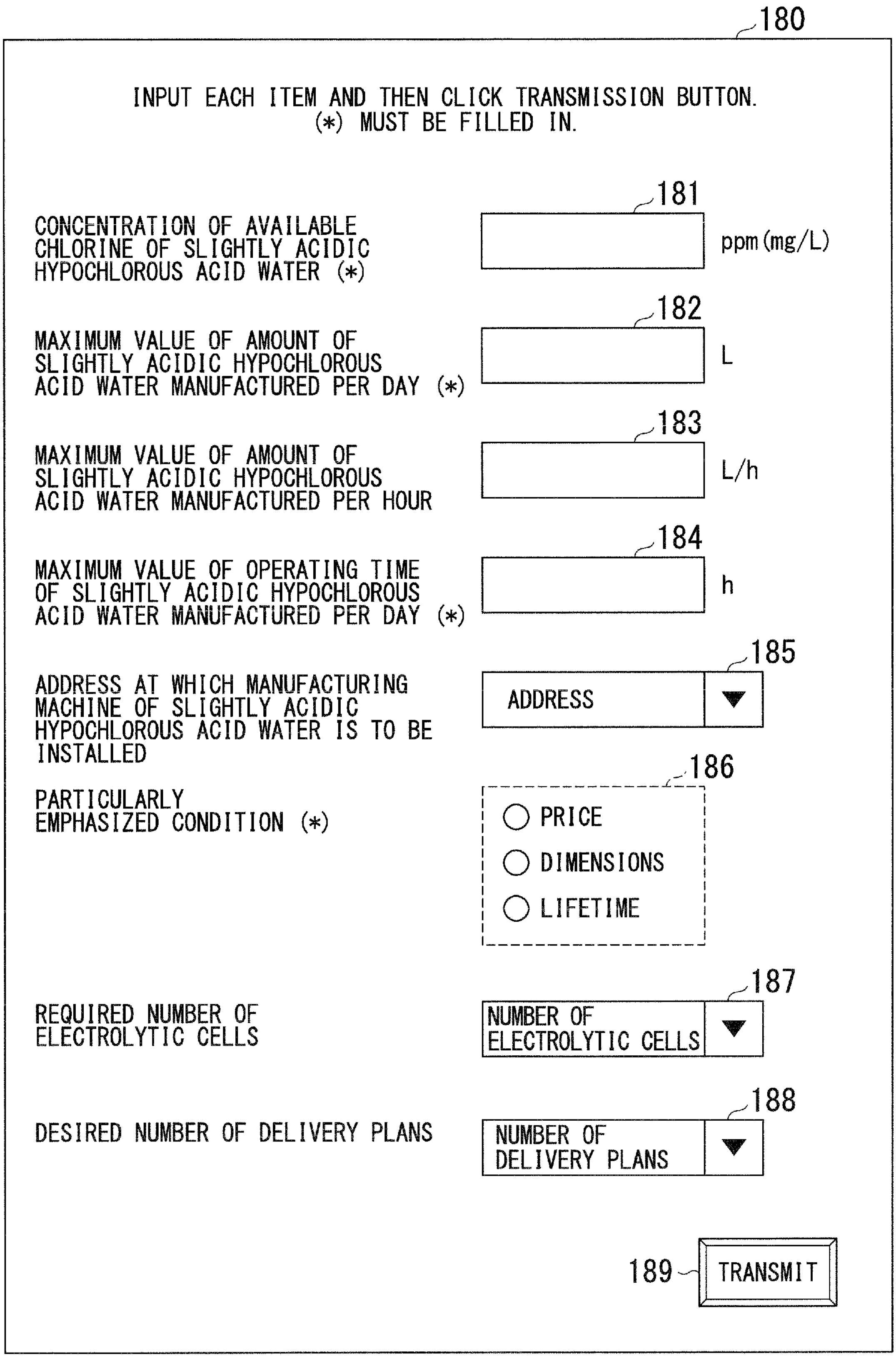
180
INPUT EACH ITEM AND THEN CLICK TRANSMISSION BUTTON.
(*) MUST BE FILLED IN.
181
CONCENTRATION OF AVAILABLE CHLORINE OF SLIGHTLY ACIDIC HYPOCHLOROUS ACID WATER (*)
ppm(mg/L)
182
MAXIMUM VALUE OF AMOUNT OF SLIGHTLY ACIDIC HYPOCHLOROUS ACID WATER MANUFACTURED PER DAY (*)
L
183
MAXIMUM VALUE OF AMOUNT OF SLIGHTLY ACIDIC HYPOCHLOROUS ACID WATER MANUFACTURED PER HOUR
L/h
184
MAXIMUM VALUE OF OPERATING TIME OF SLIGHTLY ACIDIC HYPOCHLOROUS ACID WATER MANUFACTURED PER DAY (*)
h
185
ADDRESS AT WHICH MANUFACTURING MACHINE OF SLIGHTLY ACIDIC HYPOCHLOROUS ACID WATER IS TO BE INSTALLED
ADDRESS
186
PARTICULARLY EMPHASIZED CONDITION (*)
PRICE
DIMENSIONS
LIFETIME
187
REQUIRED NUMBER OF ELECTROLYTIC CELLS
NUMBER OF ELECTROLYTIC CELLS
188
DESIRED NUMBER OF DELIVERY PLANS
NUMBER OF DELIVERY PLANS
189
TRANSMIT

FIG. 6

DELIVERY PLAN

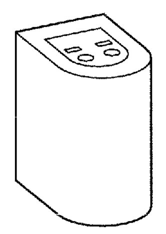

| | |
|---|---|
| NUMBER OF ELECTRODE PLATES TO BE USED FOR ELECTROLYTIC CELL | 12枚 |
| DIMENSIONS (H (mm) × D (mm) × W (mm)) | 150 × 150 × 120 |
| PRICE (YEN) | 800000 |
| MAINTENANCE FREQUENCY (DAY/TIME) | 365 |

FIG. 7

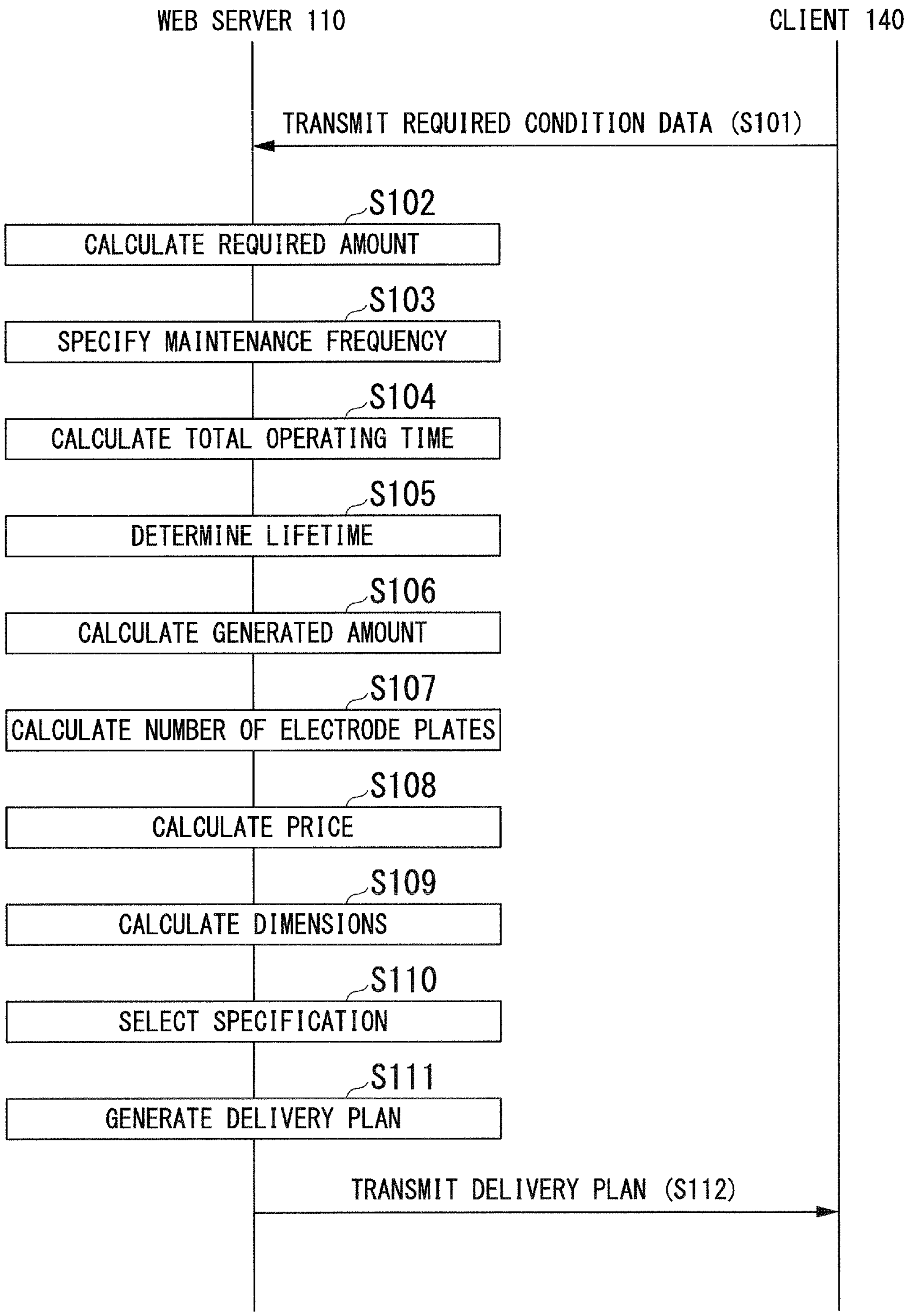
WEB SERVER 110
CLIENT 140
TRANSMIT REQUIRED CONDITION DATA (S101)
S102
CALCULATE REQUIRED AMOUNT
S103
SPECIFY MAINTENANCE FREQUENCY
S104
CALCULATE TOTAL OPERATING TIME
S105
DETERMINE LIFETIME
S106
CALCULATE GENERATED AMOUNT
S107
CALCULATE NUMBER OF ELECTRODE PLATES
S108
CALCULATE PRICE
S109
CALCULATE DIMENSIONS
S110
SELECT SPECIFICATION
S111
GENERATE DELIVERY PLAN
TRANSMIT DELIVERY PLAN (S112)

FIG. 8

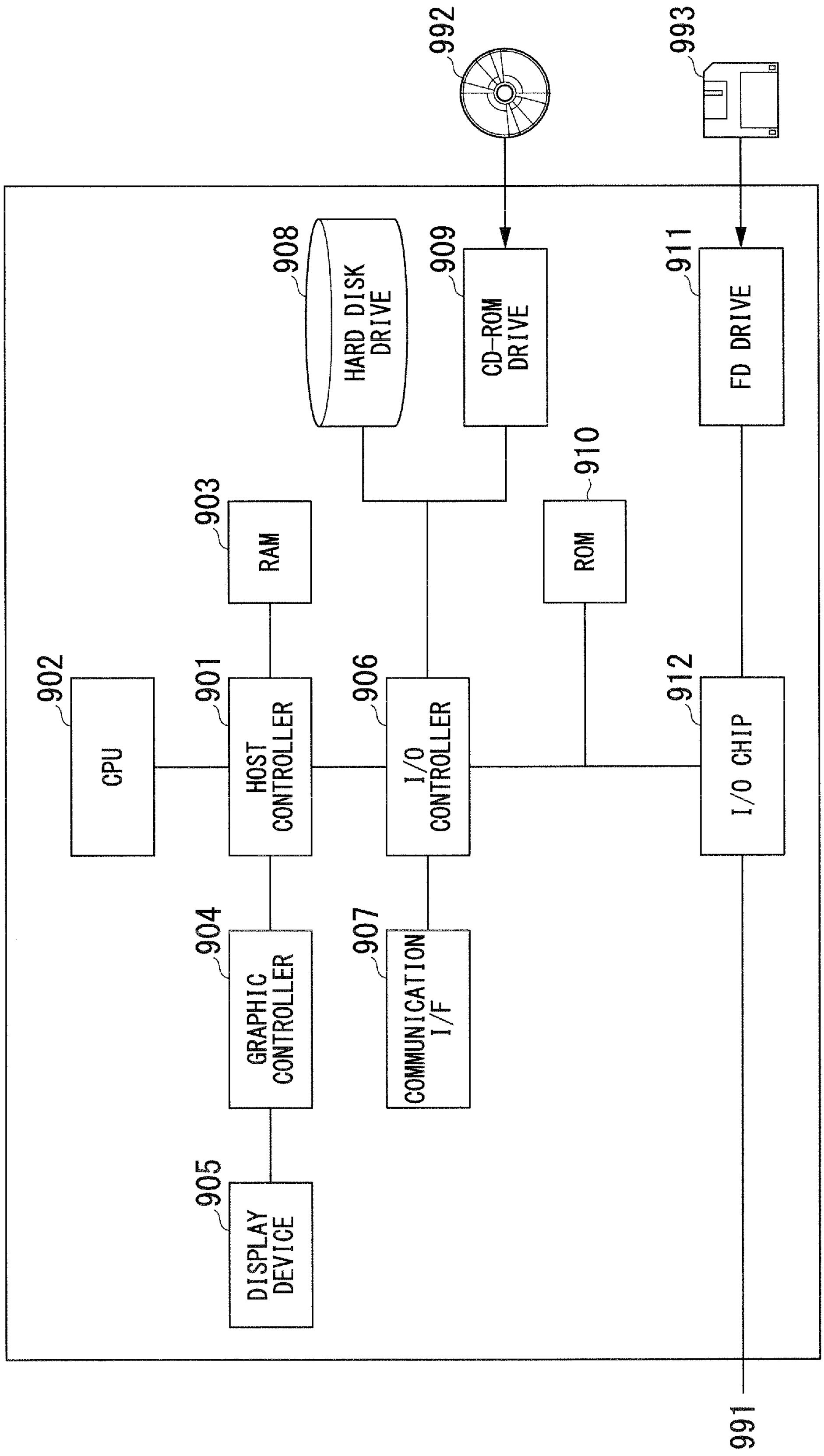
992
993
908
HARD DISK DRIVE
909
CD-ROM DRIVE
911
FD DRIVE
903
RAM
910
ROM
902
CPU
901
HOST CONTROLLER
906
I/O CONTROLLER
912
I/O CHIP
904
GRAPHIC CONTROLLER
907
COMMUNICATION I/F
905
DISPLAY DEVICE
991

**INTERNATIONAL SEARCH REPORT**

International application No.
PCT/JP2011/074398

A. CLASSIFICATION OF SUBJECT MATTER
*G06Q30/00*(2006.01)i, *C02F1/46*(2006.01)i, *G06Q50/00*(2006.01)i

According to International Patent Classification (IPC) or to both national classification and IPC

B. FIELDS SEARCHED

Minimum documentation searched (classification system followed by classification symbols)
G06Q30/00, C02F1/46, G06Q50/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2002-092463 A (Sanyo Electric Co., Ltd.), 29 March 2002 (29.03.2002), entire text; all drawings (Family: none) | 1-14 |
| A | JP 2004-280411 A (Morinaga Milk Industry Co., Ltd.), 07 October 2004 (07.10.2004), entire text; all drawings (Family: none) | 1-14 |
| A | Denkaisui Seisei Sochi no Juchu Seisanki, Denkaiso no Juchu Seisan, [online], Yugen Kaisha Nofiru, 28 May 2009 (28.05.2009), [retrieval date: 10 November 2011 (10.11.2011)], internet<URL:http://www.nofil.co.jp/order.html> | 1-14 |

☐ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 November, 2011 (10.11.11) | 22 November, 2011 (22.11.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010239972 A
- JP 2006061006 A
- JP 2006068184 A
- JP 2004318336 A